# NEW EUROPEAN PATENT SPECIFICATION

(11) **EP 3 014 531 B2**
(45) Date of publication and mention of the opposition decision: **06.08.2025**
(45) Mention of the grant of the patent: 20.07.2022
(21) Application number: 14706512.2
(22) Date of filing: 13.02.2014
(51) Int. Cl.: G06K 19/077, H01Q 1/22

(54) **CARD BODY AND SMART CARD COMPRISING IT**
KARTENKÖRPER UND CHIPKARTE MIT DIESEM KÖRPER
CORPS DE CARTE ET CARTE À PUCE LE COMPORTANT

(30) Priority: 29.06.2013 US 201361841286 P; 31.07.2013 US 201361860354 P; 21.08.2013 US 201361868089 P; 08.09.2013 US 201314020884; 13.11.2013 US 201314078527; 15.11.2013 US 201361905134 P; 12.12.2013 US 201361914996 P
(43) Date of publication of application: 04.05.2016
(60) Divisional application: 22160539.7
(73) Proprietor: Féinics AmaTech Teoranta, Dublin 16, D16 X8C3 (IE)
(72) Inventor: FINN, David, Tourmakeady County Mayo (IE); UMMENHOFER, Klaus, 87600 Kaufbeuren (DE); LOTYA, Mustafa, Celbridge Co Kildare (IE)
(74) Representative: Cremer & Cremer
(86) International application number: PCT/EP2014/052790
(87) International publication number: WO 2014/206579

(56) References cited:
- EP-A1- 1 225 538
- EP-A1- 2 045 872
- EP-A1- 2 045 872
- EP-A1- 2 525 304
- DE-U1- 202005 016 382
- KR-B1- 100 537 452
- US-A1- 2001 054 230
- US-A1- 2013 075 477

## Description

### TECHNICAL FIELD

This disclosure relates to smart cards (or other secure documents, and the like), operating at least in a contactless mode (ISO 14443). The smart card may comprise a card body (CB), an antenna module (AM), and a booster antenna (BA). The antenna module (AM) may comprise an RFID (radio frequency identification) chip or chip module (either of which may be referred to as "CM") and a module antenna (MA). The RFID chip (CM) may be mounted on a module tape (MT), typically having 6 or 8 contact pads (CP) for interfacing with a contact reader in a contact mode (ISO 7816-2). The booster antenna (BA) may comprise various antenna components, such as a card body antenna (CA) for coupling with an external contactless reader, and a coupling coil (CC) for coupling with the module antenna (MA) of the antenna module (AM).

This disclosure further relates to techniques for embedding wire in a substrate, such as a card body (CB) for a smart card (or other secure documents, and the like), particularly to form the booster antenna (BA) and its various antenna components.

### BACKGROUND

A dual interface (DI or DIF) smart card may generally comprise:
an antenna module AM ,
a card body CB, and
a booster antenna BA.

The antenna module "AM" may generally comprise a "DI" RFID chip (bare, unpackaged silicon die) or chip module (a die with leadframe, carrier or the like) - either of which may be referred to as "CM" - mounted to a module tape "MT". A module antenna MA may be disposed on the module tape MT for implementing a contactless interface. Contact pads "CP" may be disposed on the module tape MT for implementing the contact interface. The module tape MT may comprise a pattern of interconnects (conductive traces and pads) to which the chip CM and contact pads CP may be connected.

The module antenna MA may be connected, indirectly, via some of the interconnects to the chip CM, or may be directly connected to bond pads BP on the chip CM. The module antenna MA may comprise several turns of wire, such as 112 micron diameter insulated wire. Reference may be made to US 6,378,774 (2002, Toppan), for example FIGs. 12A, B thereof.

The card body CB - which may be referred to as a substrate, or an inlay substrate - may generally comprise one or more layers of material such as Polyvinyl Chloride (PVC), Polycarbonate (PC), PET-G (Polyethylene Terephtalate Glycol-modified), Copolyester (Tritan), Teslin^{™}, synthetic paper, paper and the like.

The card body CB may be generally rectangular, measuring approximately 54 mm x 86 mm (refer to ISO/IEC 7810), having a thickness of approximately 300µm thick. The card body CB is typically significantly (such as 20 times) larger than the antenna module AM

The booster antenna BA may generally comprise a relatively large winding which may be referred to as a card antenna CA component (or portion) having a number of turns disposed in a peripheral area of the card body CB, and a relatively small coupler coil (or coupler antenna) CC component (or portion) having a number of turns disposed at a coupling area of the card body CB corresponding to the antenna module AM

The card antenna CA and coupler coil CC may comprise wire mounted to (embedded in) the card body CB using an ultrasonic tool comprising a sonotrode and a capillary. See, for example US 6,698,089 and US 6,233,818. The wire may be non-insulated, insulated, or self-bonding wire, having an exemplary diameter in the range of approximately 50 - 112 µm.

### Some Patent References

NL 9100347 (1992, Nedap) discloses a contactless card having the following elements arranged as shown in Figuur 1; (1) geintegreerde schakeling (integrated circuit); (2) electronische schakeling (electronic circuit); (3) transformator (transformer); (4) kernmateriaal (core material); (5) condensator (condenser); (6) primaire spoel (primary coil) and (7) antennespoel (antenna coil)

As is evident from Figuur 1 of the Nedap patent, the electronic circuit (2, comparable to the chip CM herein) is connected with a first coil (3, comparable to the module antenna MA herein). A second coil (6, comparable to the coupling coil CC herein) is connected with the main antenna (1, comparable to the card antenna CA herein). The first coil (3, MA) is coupled with the second coil (6, CC), as aided by the core material (4).

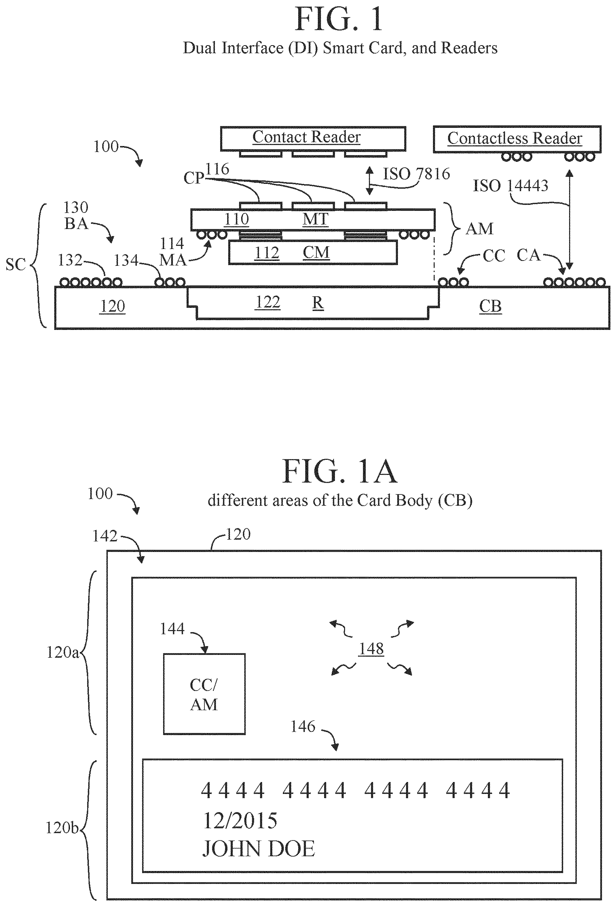

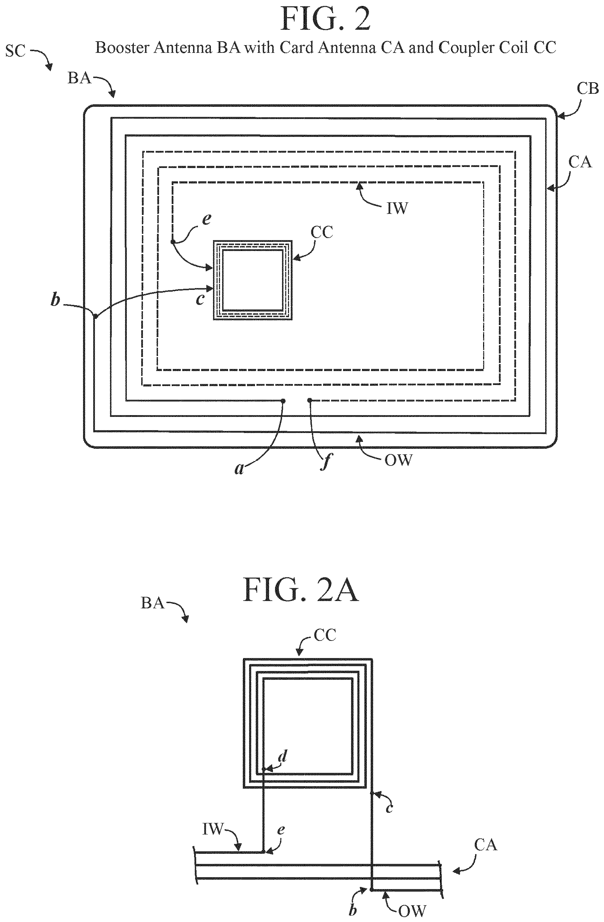

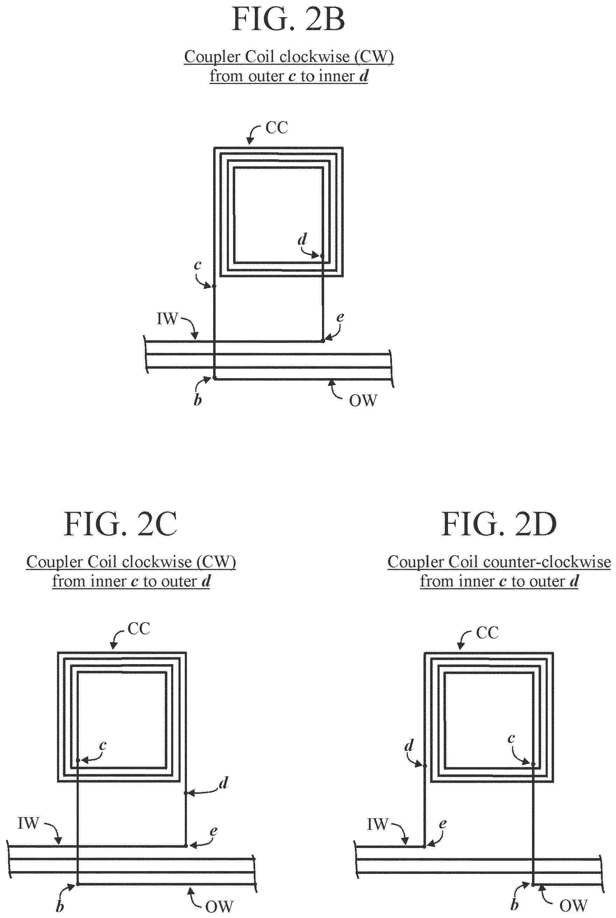

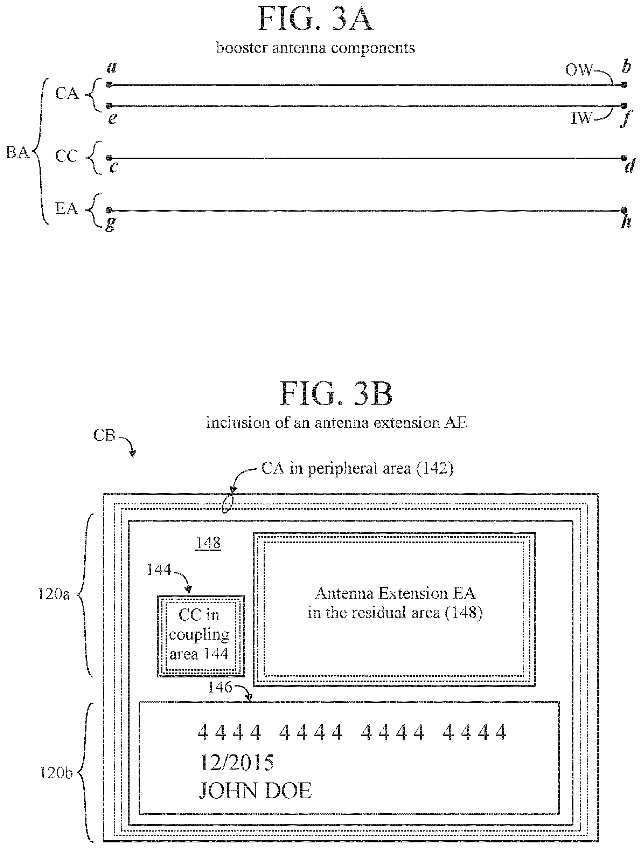

US 5,955,723 (Siemens; 1999) discloses a contactless chip card. A data carrier configuration includes a semiconductor chip. A first conductor loop is connected to the semiconductor chip and has at least one winding and a cross-sectional area with approximately the dimensions of the semiconductor chip. At least one second conductor loop has at least one winding, a cross-sectional area with approximately the dimensions of the data carrier configuration and a region forming a third loop with approximately the dimensions of the first conductor loop. The third loop inductively couples the first conductor loop and the at least one second conductor loop to one another. The first and third conductor loops are disposed substantially concentrically. FIGS. 1 and 2 illustrate that a large coil, that is to say a second conductor loop 3, has approximately the dimensions of a chip card. FIG. 1 illustrates a way of forming the small loop 4 of the large coil 3 without any crossovers, whereas FIG. 2 illustrates a small loop 4 having a crossover. FIG. 3 shows a further possible configuration of a coupling region between a small conductor loop 2 connected to a semiconductor chip 1, and a large conductor loop 3. In this case, the coupling region has a meandering path, in order to obtain as long a length of the coupling region as possible.

US 8130166 (Assa Abloy; 2012) discloses coupling device for transponder and smart card with such device. A coupling device is formed by a continuous conductive path having a central section and two extremity sections, the central section forming at least a small spiral for inductive coupling with the transponder device, the extremities sections forming each one large spiral for inductive coupling with the reader device, wherein the small spiral shows a larger pitch than the ones of the large spirals, and wherein the two extremities of the continuous path are loose such that the coupling device forms an open circuit. The pitches of the large spirals are chosen such as that the interturn stray capacitances is important and that the large spirals have mainly a capacitive behavior. And the pitch of the small spiral is chosen such as that the interturn stray capacitances are negligible, and that the small spiral has mainly an inductive behavior. FIG. 3 shows an illustrative embodiment of the transponder device and coupling device. The coupling device 10 is formed by a single conductive path having a central section and two external sections. The central portion is formed as a small spiral 12 with a large pitch, whereas the two external sections form a large spiral 11 and 11' with a small pitch. In fact, the spiral 11 and 11' are two distinct spiral physical elements, but forming a single geometrical spiral element (with a short interruption in the middle).

US 20130146671 (Infineon; 2013) discloses a booster antenna structure for a chip card is provided, wherein the booster antenna structure may include a booster antenna; and an additional electrically conductive structure connected to the booster antenna. The contactless interface on the chip card can have a chip card antenna which is contained in the chip card and connected to the chip. In order to improve the wireless communication capability, a further antenna can be provided in addition to the chip card module antenna, namely an amplifier antenna or booster antenna.

US 8,474,726 (Finn; 2013) discloses a transponder with an antenna module having a chip module and an antenna; a booster antenna having a first antenna structure in the form of a flat coil having a number of turns, an outer end and an inner end, and a second antenna structure in the form of a flat coil having a number of turns, an outer end and an inner end; the inner end of the second antenna structure connected with the outer end of the first antenna structure. The antenna module may be positioned so that its antenna overlaps one of the first antenna structure or the second antenna structure. An antenna module having two additional antenna structures is disclosed. Methods of enhancing coupling are disclosed.

US 20130075477 (Finn, Ummenhofer; 2013) discloses improving coupling in and to RFID smart cards. A data carrier such as a smart card comprising an antenna module (AM) and a booster antenna (BA). The booster antenna (BA) has an outer winding (OW) and an inner winding (IW), each of which has an inner end (IE) and an outer end (OE). A coupler coil (CC) is provided, connecting the outer end (OE, b) of the outer winding (OW) and the inner end (IE, e) of the inner winding (IW). The inner end (IE, a) of the outer winding (OW) and the outer end (OE, f) of the inner winding (IW) are left un-connected (free floating). The coupler coil (CC) may have a clockwise (CW) or counter-clockwise (CCW) sense which is the same as or opposite to the sense (CW or CCW) of the outer and inner windings. Various configurations of booster antennas (BA) are disclosed.

The Korean patent application 10-0537452 discloses a card body construction. The card antenna which is disposed in a peripheral portion of the card body extends into an interior part of the card body. Both ends of the card antenna end free in the interior part. The extended part of the card antenna has the form of meanders. A coupler coil is not present.

### SUMMARY

It is a general object of the invention to provide improved techniques for improving coupling with RFID smart cards (as an example of secure documents, and the like). This and other objects may be achieved individually or collectively by various embodiments of the invention disclosed herein.

The object is met by a card body as claimed in independent claim 1. Preferred embodiments of the invention are subject matter of the dependent claims. Further a smart card is claimed comprising the inventive card body and an antenna module having a radio frequency identification chip and a module antenna.

According to the invention a card body (CB) comprises:
a surface having a surface area, an upper portion of the surface constituting approximately half of the surface area of the card body and a lower portion of the surface constituting a remaining approximately half of the surface area of the card body;
a first area extending around a peripheral portion of the card body in at least the upper portion of the card body;
a card antenna (CA) disposed at least partially in the first area and having one free end;
a second area located in the upper portion of the card body and corresponding in size to an antenna module (AM) for the smart card;
a third area located in the upper portion of the card body which is separate from the first area and the second area;
a coupler coil disposed in the second area; and
an extension antenna (EA) disposed in the third area wherein the extension antenna comprises a first and a second coil (EA-1, EA-2) connected in series with one another,
wherein a first end of the first coil (EA-1) is connected with an end of the coupler coil (CC, 134),
wherein a second end of the first coil (EA-1) is connected with a first end of the second coil (EA-2),
wherein a second end of the second coil (EA-1) is connected with an end of the card antenna (CA, 132), and
wherein another end of the coupler coil is a free end.

A coupler coil (CC) is disposed in the second area. A portion of the extension antenna (EA) may be disposed adjacent one side of the coupler coil (CC).

According to an example not forming part of the claimed invention, generally, a smart card (SC) may comprise a metallized layer, a compensating loop, or ferrite in the card body (CB).

Generally, booster antenna (BA) components such as card antenna (CA), coupler coil (CC) and extension antenna (EA) may be laid with senses (clockwise, counter clockwise) which are opposite from one another. When being laid, these components may be laid from an innermost turn to an outermost turn, or vice-versa.

The invention(s) described herein may relate to industrial and commercial industries, such RFID applications, smart cards, electronic passports and the like.

Other objects, features and advantages of the invention(s) disclosed herein may become apparent in light of the following illustrations and descriptions thereof.

### BRIEF DESCRIPTION OF THE DRAWINGS

Reference will be made in detail to embodiments of the disclosure, non-limiting examples of which may be illustrated in the accompanying drawing figures (FIGs). The figures may generally be in the form of diagrams. Some elements in the figures may be exaggerated, others may be omitted, for illustrative clarity. Some figures may be in the form of diagrams.

Although the invention is generally described in the context of various exemplary embodiments, it should be understood that it is not intended to limit the invention to these particular embodiments, and individual features of various embodiments may be combined with one another. Any text (legends, notes, reference numerals and the like) appearing on the drawings are incorporated by reference herein. Some elements may be referred to with letters ("BA", "CA", "CC", "EA", and the like), rather than or in addition to numerals.
**FIG. 1** is a cross-section of a dual-interface smart card and readers, and shows background information for understanding the invention.
**FIG. 1A** is a top view of a card body (CB) for the smart card of FIG. 1, and shows background information for understanding the invention.
**FIG. 2** is a diagram of an example of a booster antenna (BA) having a card antenna (CA) with an inner winding (IW) and an outer winding (OW), and a coupler coil (CC); it shows background information for understanding the invention.
**FIGs. 2A - 2D** are diagrams illustrating arrangements of a coupler coil (CC) in relation to a card antenna (CA), showing background information for understanding the invention.
**FIG. 3A** is a diagram illustrating a card antenna (CA), coupler coil (CC) and extension antenna (EA) components of a booster antenna (BA); it shows background information for understanding the invention.
**FIG. 3B** is a diagram illustrating various areas of a card body CB of a smart card; it shows background information for understanding the invention.
**FIG. 4** is a diagram illustrating some antenna components, at least one of which is a "true" coil having a cross-over; it shows background information for understanding the invention.
**FIGs. 4A - 4E** are diagrams illustrating not claimed examples of a booster antenna (BA) with card antenna CA, a coupler antenna (CC) and an extension antenna (EA).
**FIGs. 4F - 4H** are diagrams illustrating not claimed examples of a booster antenna (BA) with card antenna CA, a coupler antenna (CC) and an extension antenna (EA).
**FIG. 4I** is a diagram illustrating an embodiment of a booster antenna (BA) with card antenna CA, a coupler antenna (CC) and an extension antenna (EA) according to the present invention.
**FIG. 5A** is an illustration of a booster antenna (BA) with its coupler antenna (CC) disposed slightly off-center from the module antenna (MA) of an antenna module (AM); it shows background information for understanding the invention.
**FIG. 5B** is an illustration of a booster antenna (BA) with a coupler coil (CC) having a free end; it shows background information for understanding the invention.
**FIG. 5C** is an illustration of a booster antenna (BA) with a coupler coil (CC) which is formed as an extension of windings of the card antenna (CA); it shows background information for understanding the invention.
**FIG. 5D** is an illustration of a booster antenna (BA) with a coupler coil (CC) having two free ends within the coil; it shows background information for understanding the invention.
**FIG. 5E** is a diagram illustrating a "folded" coupler coil CC; it shows background information for understanding the invention.
**FIGs. 5F, 5G, 5H** are diagrams (5F, 5G, plan view; 5H perspective view) of a composite booster antenna having a first booster antenna (BA-1) in one plane, such as on one side of a card body (CB) and a second booster antenna (BA-2) in another plane, such as on an opposite side of the card body (CB); each showing background information for understanding the invention.
**FIGs. 6A****, B, C, D** are diagrams (plan view) of additional configurations for booster antennas (BA), disposed primarily in the top half of the card body (CB); each showing background information for understanding the invention.
**FIG. 7** is a cross-sectional illustration of wire coil comprising 7 windings embedded on a substrate of a card body (CB), and shows background information for understanding the invention.
**FIG. 10A, 10B** are diagrams (plan views), each showing a configuration of a coupler coil (CC), and show background information for understanding the invention.
**FIGs. 11A - 11F** are diagrams (plan views), each showing a configuration of booster antenna (BA), and various arrangements of its components (CA, CC, EA) and each showing background information for understanding the invention.
**FIG. 12** shows diagrammatically, and FIG. 12A shows more "realistically", a not claimed example of a booster antenna BA.
**FIGs. 13A - 13E** illustrate a not claimed example of laying the booster antenna (BA), step-by-step.
**FIG. 13F** is a diagram showing a not claimed example of a booster antenna.
**FIG. 15** shows diagrammatically, and **FIG. 15A** shows more "realistically", a not claimed example of a booster antenna (BA) having capacitive extensions (CE).
**FIG. 15B** is a diagram showing a not claimed configuration of a booster antenna (BA).
**FIG. 15C** is a diagram showing a not claimed configuration for components of a booster antenna (BA)
**FIG. 15D** is a diagram showing a not claimed configuration for components of a booster antenna (BA)

### DETAILED DESCRIPTION

Various embodiments will be described to illustrate teachings of the invention(s), and should be construed as illustrative rather than limiting. Any dimensions and materials or processes set forth herein should be considered to be approximate and exemplary, unless otherwise indicated.

In the main hereinafter, RFID cards, electronic tags and secure documents in the form of pure contactless cards, dual interface cards, phone tags, electronic passports, national identity cards and electronic driver licenses may be discussed as exemplary of various features and embodiments of the invention(s) disclosed herein. As will be evident, many features and embodiments may be applicable to (readily incorporated in) other forms of smart cards, such as EMV payment cards, metal composite cards, metal hybrid cards, metal foil cards, access control cards and secure credential documents. As used herein, any one of the terms "transponder", "tag", "smart card", "data carrier" and the like, may be interpreted to refer to any other of the devices similar thereto which operate under ISO 14443 or similar RFID standard. It is referred to the following standards:
- ISO/IEC 14443 (Identification cards - Contactless integrated circuit cards - Proximity cards) is an international standard that defines proximity cards used for identification, and the transmission protocols for communicating with it.
- ISO/IEC 7816 is an international standard related to electronic identification cards with contacts, especially smart cards.
- EMV standards define the interaction at the physical, electrical, data and application levels between IC cards and IC card processing devices for financial transactions. There are standards based on ISO/IEC 7816 for contact cards, and standards based on ISO/IEC 14443 for contactless cards.

A typical data carrier described herein may comprise
(i) an antenna module (AM) having an RFID chip (CM; or chip module) and a module antenna (MA),
(ii) a card body (CB) and
(iii) a booster antenna (BA) with coupler coil (CC) disposed on the card body (CB) to enhance coupling between the module antenna (MA) and the antenna of an external RFID "reader".

When "chip module" is referred to herein, it should be taken to include "chip", and vice versa, unless explicitly otherwise stated.

The module antenna (MA) may comprise a coil of wire, conductive traces etched or printed on a module tape (MT) or antenna substrate (AS) for the antenna module (AM), or may be incorporated directly on the chip itself.

Throughout the various embodiments disclosed herein, unless specifically noted otherwise (in other words, unless excluded), the element referred to as "CM" will most appropriately be a bare integrated circuit (IC) die (or RFID chip), rather than a chip module (a die with a carrier). In contrast therewith, some figures present examples that are specifically "chip modules" having IC chips (such as a "CM") mounted and connected to substrates. A "chip module" (die and carrier) with a module antenna (MA) mounted and connected thereto may be referred to as an antenna module (AM).

The booster antenna (BA) with coupler coil (CC) may be formed by embedding wire in an inlay substrate or card body (CB). However, it should be understood that the antenna may be formed using processes other than by embedding wire in a substrate, such as additive or subtractive processes such as printed antenna structures, coil winding techniques (such as disclosed in US 6,295,720**),** antenna structures formed on a separate antenna substrate and transferred to the inlay substrate (or layer thereof), antenna structures etched (including laser etching) from a conductive layer on the substrate, structured nanowire networks (including laser ablation) on the substrate, conductive material deposited on the substrate or in channels formed in the substrate, or the like. When "inlay substrate" is referred to herein, it should be taken to include "card body", and vice versa, as well as any other substrate for a secure document, unless explicitly otherwise stated.

The descriptions that follow are mostly in the context of dual interface (DI, DIF) smart cards, and relate mostly to the contactless operation thereof. Many of the teachings set forth herein may be applicable to electronic passports and the like having only a contactless mode of operation. Generally, any dimensions set forth herein are approximate, and materials set forth herein are intended to be exemplary.

**FIGs. 1** and **1A** illustrate a smart card (SC) 100 in cross-section, along with a contact reader and a contactless reader. The antenna module AM may comprise a module tape (MT) 110, an RFID chip (CM) 112 disposed on one side of the module tape MT along with a module antenna (MA) 114 and contact pads (CP) 116 disposed on the other side of the module tape MT for interfacing with an external contact reader. The card body (CB) 120 comprises a substrate which may have a recess (R) 122 extending into one side thereof for receiving the antenna module AM. (The recess R may be stepped - such as wider at the surface of the card body CB - to accommodate the profile of the antenna module AM.) The booster antenna (BA) 130 may comprise turns (or traces) of wire (or other conductor) embedded in (or disposed on) the card body CB, and may comprise a number of components such as (i) a card antenna (CA) component 132 and (ii) a coupler coil (CC) component 134.

The card body (CB) 120 has a surface with an overall surface area, such as approximately 54mm x 86 mm ~= 4600 mm². An upper portion 120a of the card body CB constitutes approximately half (such as 50-70%) of the overall surface area of the card body CB, and a lower portion 120b of the card body CB constitutes a remaining approximately half (such as 30-50%) of the overall surface area of the card body CB.

A "peripheral" area 142 of the surface of the card body CB extends around the periphery of the card body CB in at least the upper portion 120a thereof, and may have a width of up to approximately 5 mm. The card antenna CA component may be disposed in this first area. The width of the first, peripheral area 142 may be greatest at the top edge of the card body CB, of medium width at the side edges of the card body CB, and least at the bottom edge of the card body CB.

A "coupling" area 144 of the surface of the card body CB is located in an interior area (within the peripheral area 142) of the card body CB, in the upper portion 120a thereof, at a position corresponding to the location of the antenna module AM, and is of approximately the same size as the antenna module AM, such as approximately 8.2mm × 10.8mm for a 6-contact module and 11.8mm × 13mm for an 8-contact module.

An "embossing" area 146 of the surface of the card body CB is located in an interior area (within the peripheral area 142) of the card body CB, in the lower portion 120b thereof, is separate from the peripheral area 142 and the coupling area 144, and may constitute most (such as 80-90%) of the lower portion 120b of the card body CB.

A "remaining" (or "residual") area 148 of the surface of the card body CB is located in an interior area (within the peripheral area 142) of the card body CB, in the upper portion 120a thereof, is separate from the peripheral area 142 and the coupling area 144, and may constitute most (such as 60-80%) of the upper portion 120b of the card body CB. The card antenna 132 and coupler coil 134 are not disposed in this remaining area 148 - in other words, are disposed substantially entirely in areas (142, 144) other than the remaining area 148 (and other than the embossing area 146).

As described in greater detail hereinbelow, according to an aspect of the invention, generally, an additional booster antenna component, referred to herein as an antenna extension (EA) component defined as in claim 1, is disposed in remaining (or residual) area 148 of the surface of the card body CB. The antenna extension EA comprises a first coil and a second coil and may comprise several turns (or traces) of wire (or other conductive material), and is connected with both of the card antenna CA and coupler coil CC.

It is generally not desirable, but nevertheless possible that some of the booster antenna BA components, particularly at least a portion of the card antenna CA and a portion of the extension antenna EA may extend into the embossing area (146). In such a scenario, flat ribbon wire may be used. A wire for the booster antenna BA may be pre-flattened in an area which will correspond to where the wire will be disposed in the embossing area (146).

### An Example of a Booster Antenna (BA)

The aforementioned US 20130075477 discloses a booster antenna BA arrangement (configuration) for a smart card. The booster antenna BA generally comprises a card antenna CA and a coupler coil.

A card antenna CA may comprise a single wire (or conductive trace) having two ends, arranged in a generally a rectangular spiral pattern, and disposed in the peripheral area (see 142, **FIG. 1A****)** of the card body CB. The card antenna CA may comprise different portions, such as disclosed in US 8130166 (Assa Abloy; 2012). The card antenna CA may comprise two distinct windings, such as an inner winding IW and an outer winding OW. A coupler coil CC may or may not be associated with the card antenna CA. The card antenna CA and coupler coil CC may constitute two components of a booster antenna BA.

**FIG. 2** shows a booster antenna BA comprising a card antenna CA component extending around the peripheral area (142) of a card body CB, and having two windings - an outer winding OW and an inner winding IW, both extending substantially around the peripheral area (142) of the card body CB. Additionally, a coupler coil CC is shown which is disposed in the coupling area (144).

The booster antenna BA may be formed using insulated, discrete copper wire disposed (such as ultrasonically bonded) around (inside of) the perimeter (periphery) of a card body CB (or inlay substrate, or data carrier substrate, such as formed of thermoplastic). The booster antenna BA comprises an outer winding OW (or coil, D) and an inner winding IW (or coil, D), and further comprises a coupler coil CC, all of which, although "ends" of these various coil elements are described, may be formed from one continuous length of wire (such as 80µm self-bonding wire) which may be laid upon or embedded in the card body CB.

The outer winding OW may be a long wire (or conductive trace) wire having two ends - an inner end "a" and an outer end "b" - mounted to the card body CB in the form of a rectangular spiral having a number of (at least one) turns, and may be disposed in the peripheral area (142) of the card body CB.

The outer winding OW (compare D, FIG. 1A) may be formed as a spiral having a number (such as 2-3) of turns and having an inner end IE at point "a" and an outer end OE at point "b". The outer winding OW is near (substantially at) the periphery (perimeter) of the card body CB. The inner end IE ("a") of the outer winding OW is a free end.

The dimensions of the card body CB may be approximately 54mm x 86mm. The outer dimension of the outer winding OW of the booster antenna BA may be approximately 80 x 50mm. The wire for forming the booster antenna BA may having a diameter (d) of approximately 100 µm (including, but not limited to 80mm, 112µm, 125µm).

The inner winding IW may be a long wire (or conductive trace) having two ends - an inner end "e" and an outer end "f' - mounted to the card body in the form of a rectangular spiral having a number (at least one) of turns, and may be disposed in the peripheral area (142) of the card body CB. The inner winding IW may be disposed within (towards the interior of the card body CB) the outer winding OW.

The outer end "b" of the outer winding OW may be connected with the inner end "e" of the inner winding IW, either directly (not shown, see FIG. 2A of US 13600140) or via the intermediary of a coupler coil CC.

The inner end IE (a) of the outer winding OW and the outer end OE (f) of the inner winding IW may be left unconnected, as "free ends".

The overall booster antenna BA comprising outer winding OW, coupler coil CC and inner winding IE is an open circuit, and may be referred to as a "quasi-dipole" - the outer winding OW constituting one pole of the dipole, the inner winding IW constituting the other pole of the dipole - center fed by the coupler coil CC.

The coupler coil CC may be a long wire (or conductive trace) or conductive trace having two ends "c" and "d". US 20130075477 discloses various configurations for laying and connecting the inner winding IW, outer winding OW and coupler coil CC. See, for example, FIGs. 3A-3D therein. The present invention is not limited to any particular one(s) of these configurations.

The coupler coil CC may be formed as a spiral having a number (such as approximately 10) of turns and having two ends "c" and "d". The end "c" may be an outer end OE or an inner end IE, the end "d" may be an inner end IE or an outer end OE, as described with respect to the embodiments shown in FIGs. 3A, 3B, 3C, 3D of US 20130075477. The coupler coil CC is disposed at an interior portion of the card body CB, away from the periphery, and is shown only generally with a few dashed lines in **FIG. 2****.**

It should be understood that the booster antenna BA could be made with other than wire using additive processes such as printing conductive material onto the substrate CB, or subtractive processes such as etching conductive material away from the substrate CB. For such non-wire antennas, although there may be no actual direction such as is inherent with laying or embedding the wire (the course of laying the wire, from one end to the other), but the resulting spiral elements OW, IW, CC of the booster antenna BA may nevertheless exhibit a clockwise CW or counter-clockwise CCW "virtual sense" (or orientation) which can be determined by analogy to laying wire. (For an additive process such as inkjet printing, which is sequential, the sense would be actual.) The "sense" can be determined by following the pattern from "a" to "f", or from "f" to "a".

As used herein, "pitch" may refer to the average distance, center-to-center (c-c), between adjacent turns of a wire for a winding (OW, IW) or the coupler coil (CC), as it is being laid. (Or, by analogy, to the center-to-center distance between adjacent conductive tracks made by additive or subtractive processes). It should be understood that during manufacturing (including as a result of subsequent manufacturing steps such as laminating), the pitch of the wire may vary or change somewhat, such as +/- 5%, or more. And, when going around a corner, such as in a rectangular spiral, the pitch may be somewhat indeterminate. It should also be understood that the pitch of the windings (OW, IW) or coupler coil (CC) may be advertently altered (typically increased) locally, such as at the free ends "a" and "f", to accommodate manufacturing processes (such as starting and ending embedding the wire) and the like. "Pitch" may refer to the initial (during laying) or final (after laminating) distance (c-c) between adjacent turns of a winding.

The outer winding OW, coupler coil CC and inner winding IW may be formed as one continuous structure, using conventional wire embedding techniques. It should be understood that references to the coupler coil CC being connected to ends of the outer winding (OW) and inner winding (IW) should not be construed to imply that coupler coil CC is a separate entity having ends. Rather, in the context of forming one continuous structure of outer winding OW, coupler coil CC and inner winding IW, "ends" may be interpreted to mean positions corresponding to what otherwise would be actual ends - the term "connected to" being interpreted as "contiguous with" in this context.

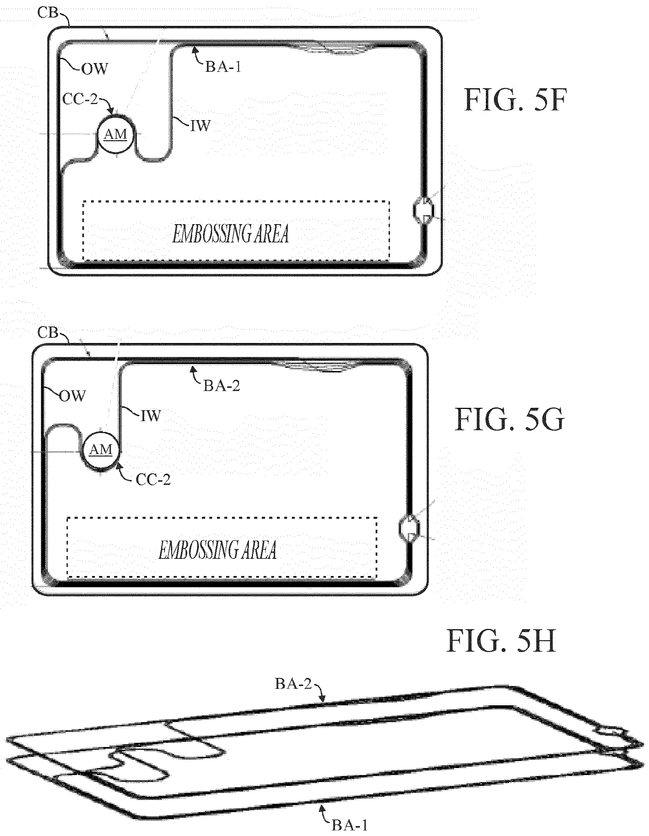

The inner winding IW may be disposed within the outer winding OW, as illustrated, on a given surface of the card body CB (or layer of a multi-layer inlay substrate). Alternatively, these two windings of the booster antenna BA may be disposed on opposite surfaces of the card body CB or on two different layers of the card body CB (see FIGs. 5F, 5G), substantially aligned with one another (in which case they would be "top" and "bottom" windings rather than "outer" and "inner" windings. The two windings of the booster antenna BA may be coupled in close proximity so that voltages induced in them may have opposite phase from one another. The coupler coil CC may be on the same surface of the card body CB as the outer and inner windings.

The turns of the outer winding OW and inner winding IW of the booster antenna BA may be at a pitch of 0.2mm (200µm), resulting in a space of approximately one wire diameter between adjacent turns of the outer winding OW or inner winding IW. The pitch of the turns of the coupler coil CC may be substantially the same as or less than (stated otherwise, not greater than) the pitch of turns of at least one of the outer winding OW and inner winding IW - for example 0.15mm (150 µm), resulting in space smaller than one wire diameter between adjacent turns of the coupler coil (CC). Self-bonding copper wire may be used for the booster antenna BA. The pitch of both the outer/inner windings OW/IW and the coupler coil CC may both be approximately 2x (twice) the diameter of the wire (or width of the conductive traces or tracks), resulting in a spacing between adjacent turns of the spiral(s) on the order of 1 wire diameter (or trace width). The pitches of the outer winding OW and the inner winding IW may be substantially the same as one another, or they may be different than each other. The outer winding OW and inner winding IW may have the same sense (clockwise CW or counter-clockwise CCW) as each other.

It is within the scope of the invention that more turns of wire for the coupler coil CC can be accommodated in a given area - for example, by laying two "courses" of wire, one atop the other (with an insulating film therebetween, if necessary), in a laser-ablated trench defining the area for the turns of the coupler coil CC.

In **FIG. 2****,** the coupler coil CC is shown without detail, represented by a few dashed lines. Some details of its construction, and how it may be connected with the outer winding OW and inner winding IW are set forth in FIGs. 3A -3D.

**FIG. 2A** shows one example of a coupler coil CC component which may be laid by starting at a point "c" (coming from an outer winding OW of the card antenna CA), laying the coupler coil CC component from an outermost turn to an innermost turn thereof, in a counter-clockwise CCW direction. When the innermost winding of the coupler coil CC component is complete (point "***d***"), the wire may cross-over the already laid turns of the coupler coil CC component to resume (or continue) formation of the card antenna CA component (such as the inner winding IW thereof), by way of example. Some alternatives may include:
(i) winding in a clockwise CW direction,
(ii) laying the innermost turn and working outward to the outermost turn,
(iii) laying only a portion of the coupler coil CC component (such as an inner winding iw thereof), exiting and laying at least a portion of another booster antenna BA component, and later returning to lay a remaining portion of the coupler coil CC component.

**FIG. 2B** shows an example of a coupler coil CC component which may be laid by starting at a point "c" (coming from an outer winding OW of the card antenna CA), laying the coupler coil CC component from an outermost turn to an innermost turn thereof, in a clockwise CW direction. When the innermost winding of the coupler coil CC component is complete (point "***d***"), the wire may cross-over the already laid turns of the coupler coil CC component to resume (or continue) formation of the card antenna CA component (such as the inner winding IW thereof), by way of example.

**FIG. 2C** shows an example of a coupler coil CC component which may be laid by starting at a point "c" (coming from an outer winding OW of the card antenna CA), laying the coupler coil CC component from an innermost turn to an outermost turn thereof, in a clockwise CW direction. (This may require several cross-overs, as illustrated.) When the outermost winding of the coupler coil CC component is complete (point "***d***"), the wire may be routed (no cross-over may be required) towards the periphery of the card body CB to resume (or continue) formation of the card antenna CA component (such as the inner winding IW thereof), by way of example.

**FIG. 2D** shows an example of a coupler coil CC component which may be laid by starting at a point "c" (coming from an outer winding OW of the card antenna CA), laying the coupler coil CC component from an innermost turn to an outermost turn thereof, in a counter-clockwise CCW direction. When the outermost winding of the coupler coil CC component is complete (point "***d***"), the wire may be routed (no cross-over may be required) towards the periphery of the card body CB to resume (or continue) formation of the card antenna CA component (such as the inner winding IW thereof), by way of example.

An antenna module AM may be mounted in on the card body CB so that its module antenna MA is closely adjacent the coupler coil CC, for coupling therewith. The antenna module AM may be disposed with its module antenna MA overlapping the coupler coil CC, or with its module antenna completely within the interior of the coupler coil CC, or with entirely within the coupler coil CC. The antenna module AM may be installed in a milled cavity on the card body CB so that its module antenna MA may be substantially coplanar with the coupler coil CC. The module antenna MA may be at a different level than (not coplanar with) the coupler coil CC.

The module antenna MA for the antenna module AM may also be a coil of wire wound with either a clockwise (CW) or counter-clockwise (CCW) sense. The module antenna MA may have the same sense (CW, or CCW) as the coupler coil CC. The module antenna MA may have the opposite sense (CW, or CCW) as the coupler coil CC. The module antenna MA may have the same sense (CW, or CCW) as the outer winding OW and/or the inner winding IW. The module antenna MA may have the opposite sense (CW, or CCW) as the outer winding OW and inner winding IW.

It may be noted that NL 9100347 (NEDAP; 1992) and US 5,955,723 (Siemens; 1999) both describe 2 coils that are of a "given dimension". For example Coils 1 & 3 - Coil 1 on the chip and Coil 3 on the card - and they also say they are concentric to each other and that allows the coupling. In the arrangements described herein, the coils (MA, CC) are not restricted to being the same size, nor are they restricted to being concentrically positioned.

In the course of laying the wire (or otherwise creating conductive paths for the antenna elements OW, CC, IW, using any of a variety of additive or subtractive processes) for the booster antenna BA, it is evident that the wire (or conductive path) may need to cross over itself at several positions. For a booster antenna BA comprising wire, the wire may be insulated, typically self-bonding wire. For conductive paths, appropriate insulating or passivation layers or films may be used to facilitate cross-overs.

### Booster Antenna (BA) Components and Placement on the Card Body (CB)

**FIG. 3A** shows, schematically, some components of an exemplary booster antenna (BA) - namely:
- an exemplary card antenna CA may comprise a first winding OW having two ends "a" and "b" and a second winding IW having two ends "e" and "f', such as may have been described above.
- an exemplary coupler coil CC may have two ends "c" and "d", such as may have been described above
- the card antenna CA and coupler coil CC may be connected with one another in any suitable manner, such as may have been described above
- an antenna extension AE may be a long wire (or conductive trace) wire having two ends "g" and "h" - mounted to the card body CB in any suitable form such as (but not limited to) a spiral having a number of (at least one) turns, and is disposed in the residual area (see 148, FIG. 1A) of the card body CB.
- the booster antenna BA components CA (OW, IW), CC and AE are illustrated as straight line segments, the dots at their two ends simply indicating an end position of the wire (or conductive trace), being included for graphic clarity.

**FIG. 3B** expands upon **FIG. 1A** and illustrates, schematically and generally, the addition (inclusion) of an extension antenna EA component of a booster antenna BA disposed in the residual area (148) of a smart card. The extension antenna EA is shown only generally in this figure, it is shown in greater detail in other figures.

### Some configurations of Booster Antennas BA with Extension Antennas EA

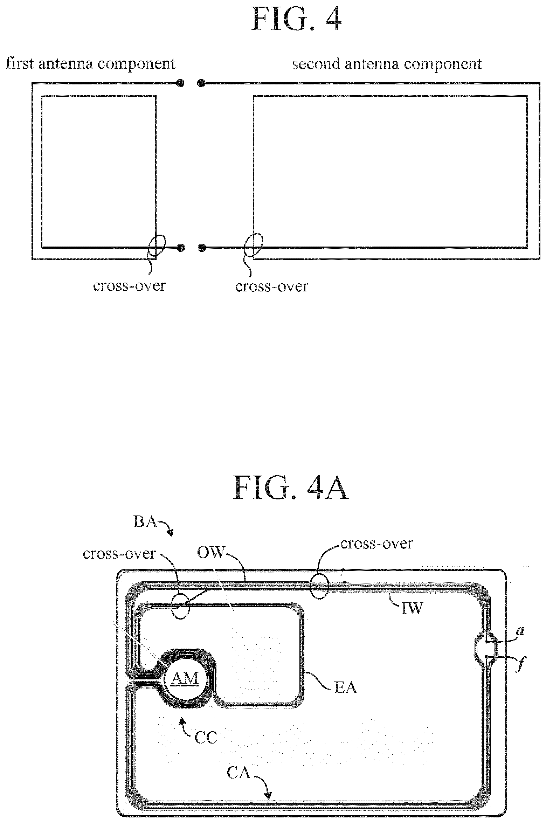

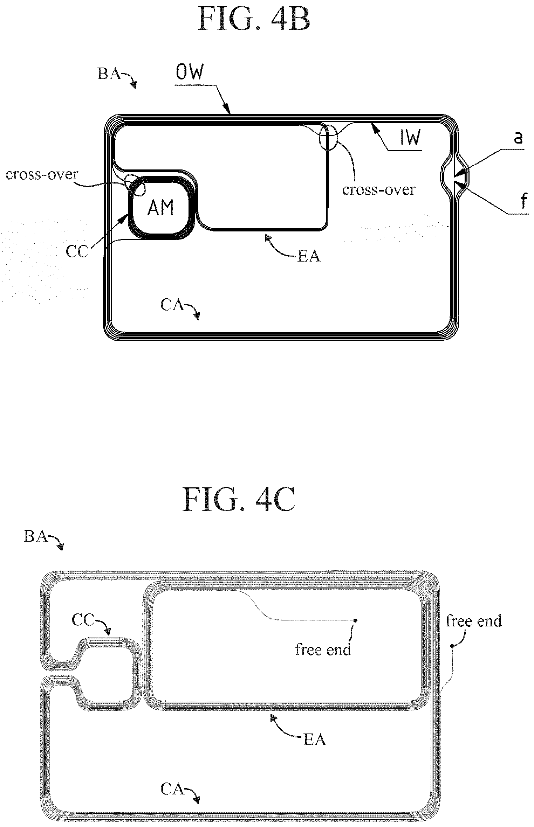

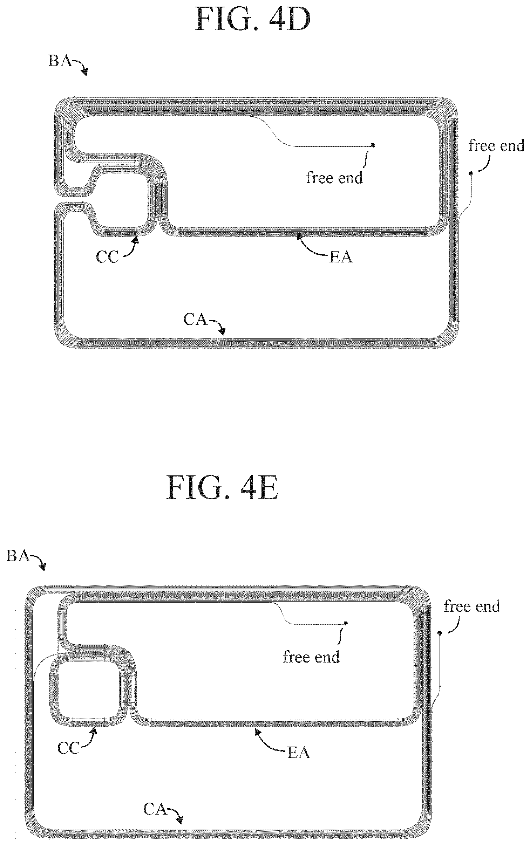

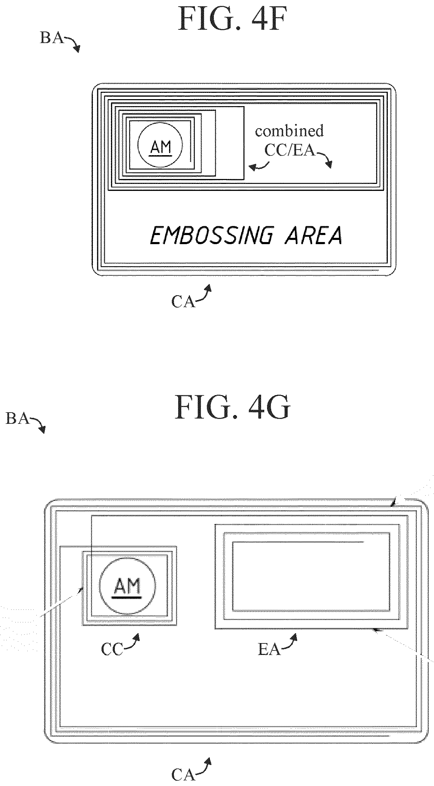

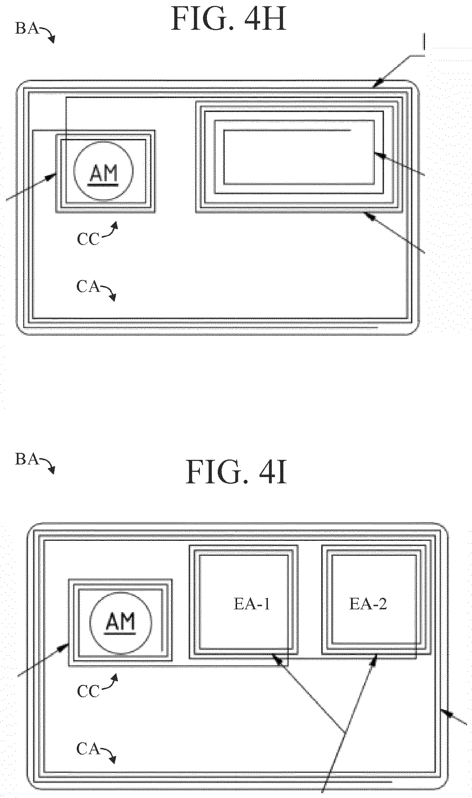

Some configurations of booster antennas BA comprise card antennas CA which may be one winding or two windings (such as inner winding IW and outer winding OW), coupler coils CC (or coupler antennas) and extension antennas EA (or antenna extension, or extension coil, or extension loop). Each of the (CA, OW, IW, CC, EA) booster antenna components typically has two ends (see FIG. 3A), and typically has a plurality of windings (or turns). Both of the ends of a given antenna component may be connected to ends of other antenna components. Alternatively, one of the two ends of an antenna component may be a free end. Some of these components may be in the form of an open loop coil or a closed coil. An antenna component in the form of a "true" coil will exhibit a cross-over (see **FIG. 4****).**

**FIG. 4** is a diagram illustrating schematically some antenna components of a booster antenna (BA), at least one of which is a "true" coil having a cross-over. Generally, geometrically speaking, if a coil has at least one complete 360° turn, and is connected to another component that is disposed either outside of or inside of the coil - and there are no vias through the substrate (card body CB) for making connections from inside the coil to the outside thereof - it is inherently necessary that the pattern of the coil cross-over itself so that the two ends of the coil can connect with two terminals of the other component, as shown. In this figure, both of the components are true-coils. As used herein, a "true" coil may be defined as a coil, loop or spiral of wire (or other conductor) having two ends (such as "g" and "h"), extending at least approximately 360°, substantially enclosing an area (such as the coupling area 144), and crossing over itself (either from the outside in, or from the inside out).

US 61697825 filed 7 Sep 2012 discloses (FIG. 5H therein) a booster antenna BA comprising an inner winding IW and an outer winding OW (as disclosed herein, together the inner winding IW and outer winding OW may constitute a card antenna CA), an "open loop" coupler coil CC at the position of the antenna module AM, and an "extension" which may be referred to herein as an "antenna extension" or "extension antenna" or "extension coil" EA. See also US 13/600,140 filed 30 Aug 2012 (now US 20130075477 published 3/28/2013).

**FIG. 4A** is a diagram corresponding to FIG. 5H of US 13600140, showing a booster antenna (BA) having a card antenna CA, a coupler coil CC and an extension antenna (EA). These components may be formed (embedded in the card body CB) as one continuous embedded coil. The coupler coil CC is in the form of an open loop ("horseshoe").

Note that both of the outer winding OW and inner winding IW are enlarged to form the coupler coil CC and substantially fully encircle the antenna module AM in the coupling area (144). The free ends (a, f) of the card antenna CA are shown disposed at the right edge of the card body CB.

The extension antenna EA has one end extending from an end of the coupler coil CC, and another end extending from an end of the card antenna CA, and exhibits a cross-over. The extension antenna EA (or extension coil, or extension loop) is disposed so as to have a portion adjacent two sides (or approximately 180°) of the coupler coil CC.

An antenna extension EA component is shown as an "extension" of the inner winding IW, comprising some turns of wire in a spiral pattern disposed near the antenna module AM in the left hand side of the top (as viewed) portion (120a) of the card body CB. The extension antenna EA is disposed outside of, but near the coupling area (144) of the card body CB, in the residual area (148).

In this example, the coupler coil CC component of the booster antenna BA does not need to be a "true" coil, it does not need to have a cross-over. Rather, it may be a horseshoe-shaped "open" loop which substantially fully, but less than 360°, encircles the coupling area (144) for inductive coupling with the module antenna MA of the antenna module AM

In this example, the card antenna CA is a true coil, in the form of a spiral extending around the peripheral area (142) of the card body CB, and exhibits a cross-over.

The extension antenna (or extension coil) EA has two ends - one end is connected to the coupler coil CC, the other end is connected to the card antenna CA. The extension antenna EA may be formed as a spiral of wire embedded in the card body CB, contiguous with one or more of the card antenna CA and coupler coil CC, and is a true coil which exhibits a cross-over, and contributes to the inductive coupling of the booster antenna BA. The extension antenna EA is disposed in the residual area (148) of the card body CB, and is shown as being disposed only in the upper half (120a) of the card body CB, but it may extend to the lower half (120b) of the card body CB, including any or all of adjacent to, above, below or into the embossing area (146).

**FIG. 4B** is a diagram showing a booster antenna BA having a card antenna CA, a coupler coil CC and an extension antenna EA. These components may be formed (embedded in the card body CB) as one continuous embedded coil. The coupler coil CC is in the form of a closed loop, having a cross-over.

The extension antenna EA (or extension coil, or extension loop) has one end extending from an end of the coupler coil CC, and another end extending from an end of the card antenna CA, and exhibits a cross-over. The extension antenna EA is disposed so as to have a portion adjacent two sides (or approximately 180°) of the coupler coil CC.

In this example, the layout of the inner winding (IW) and outer windings (OW) of the card antenna CA are slightly different than in **FIG. 4A****.** The inner winding IW of the card antenna CA passes over the extension antenna EA at a different location than in **FIG. 4A****.** In this example, the coupler coil CC forms a closed loop (rather than the horseshoe shown in **FIG. 4A****)** around the antenna module AM, has a cross-over, and may therefore be considered to be a "true" coil.

In this example, the extension coil EA is a true coil having a cross-over, is disposed in the residual area (148) of the card body CB, and is shown as being disposed only in the upper half (120a) of the card body CB, but it may extend to the lower half (120b) of the card body CB and into the embossing area (146). In this example, the extension antenna (EA) may occupy a larger area and have a narrower pitch (closer spacing of windings) than the extension antenna EA **of** **FIG. 4A****.**

A benefit of having the extension antenna EA in a booster antenna BA may be to increase the inductivity of the booster antenna BA while reducing its resonance frequency. For example, without the extension antenna EA, the card antenna CA may require significantly more windings (such as in excess of 15 windings, instead of only 7 or 8 windings), depending on the spacing between the windings and the diameter or cross sectional area of the conductor of the wire used to form the booster antenna BA. It is within the scope of the invention that the card antenna CA has only one winding.

Additionally, the extension antenna EA may increase the inductive coupling between the module antenna MA of the antenna module AM and the coupler coil CC of the booster antenna BA, and this may be more important than increasing the inductivity. A high level of coupling between the primary side (coupler coil) and secondary side (antenna module) improves the transfer of energy and communication (signaling). Better coupling may also reduce the quality factor (Q) and increase performance.

The booster antennas (BA) of **FIGs. 4A** **and** **4B** both show card antennas CA having an inner winding (IW) and an outer winding (OW). Compare **FIG. 2****.**

**FIG. 4C** is a diagram showing a booster antenna BA having a card antenna CA, a coupler coil CC and an extension antenna EA. These components may be formed (embedded in the card body CB) as one continuous embedded coil. The coupler coil CC is in the form of an open loop ("horseshoe").

The extension antenna EA (or extension coil, or extension loop) has one end extending from an end of the card antenna CA, its other end is a free end. The extension antenna EA is disposed so as to have a portion adjacent one side (or approximately 90°) of the coupler coil CC.

The card antenna CA may be a single coil (not having an inner winding IW and an outer winding OW as in some of the previous examples), having one free end.

The coupler coil CC may be an open loop, rather than a "true coil", and may be horseshoe-shaped, encircling most, but not all of the coupling area (144).

The extension antenna EA may be a continuation of an end of the card antenna CA, and may have one free end which is left unconnected. The extension antenna EA may be disposed to interact on one side of the coupler coil CC. The extension antenna EA may have several turns of wire, but does not need a cross-over.

**FIG. 4D** is a diagram showing a booster antenna BA having a card antenna CA, a coupler coil CC and an extension antenna EA. These components may be formed (embedded in the card body CB) as one continuous embedded coil. The coupler coil CC is in the form of an open loop ("horseshoe").

The extension antenna EA (or extension coil, or extension loop) has one end extending from an end of the card antenna CA, its other end is a free end. The extension antenna EA is disposed so as to have a portion adjacent two sides (or approximately 180°) of the coupler coil CC.

In this example, the card antenna CA is one coil (does not have inner winding IW and outer winding OW as in some of the previous examples.) In this example, the coupler coil CC is not a "true coil", it is horseshoe-shaped and encircles most, but not all of the coupling area (144).

The extension antenna EA has one end which is an extension of the coupler coil CC, the other end is a free end. A free end makes possible the arrangement of a coil without a cross-over. In this example, the extension antenna (EA) is disposed to have portions adjacent two sides of the coupler antenna (CC).

In some of the booster antenna BA designs described herein, the card antenna CA component of the booster antenna BA may have a total of 12 windings (or turns) - for example, 6 windings each for the inner winding IW and outer winding OW, or a total of 12 for a simple card antenna CA. The extension antenna EA may have two functions, firstly to lower the resonance frequency of the booster antenna BA to the desired resonance of 13.56 MHz from approximately 18.00 MHz, for example with only 10 windings (wire diameter 80 to 112 µm and a pitch of 100 µm) in the antenna extension EA may reduce the resonance frequency by 5 MHz, and secondly to regulate or concentrate the electromagnetic field when in close coupling proximity to the external contactless reader (see **FIG. 1****)** at around 20 mm. The extension antenna EA may increase the coupling factor between the coupler coil CC and the antenna module AM

The ability to reduce the number of windings required in the card antenna CA may enhance the performance and manufacturability of the smart card. More windings makes the card stiffer, and there is not a lot of room in the peripheral area (142) of the card body CB, particularly below the embossing area (146) to accommodate very many turns of wire.

A "coupling area" (144) may be defined as the area immediately under the antenna module AM (and its module antenna (MA)). The coupler coil CC is located in the coupling area. The extension antennas EA may be disposed in other than the coupling area, as discussed above, but nevertheless may enhance the overall coupling between the booster antenna BA and the module antenna MA, and / or the booster antenna BA and the antenna of an external reader.

In **FIGs. 4C** **and** **4D****,** the one end of the extension antenna EA is connected with the coupler coil CC, rather than with the card antenna CA.

**FIGs. 4C** and **4D** illustrate how the shape and position of the extension antenna EA may be varied, with respect to the card antenna CA and coupler antenna CC, in order to tune the RF characteristics of the booster antenna BA. **FIG. 4C** shows a design where the extension antenna EA is disposed along only one side of the coupler coil CC, or coupler antenna, and two sides of the card antenna CA. **FIG. 4D** shows the extension antenna EA disposed adjacent two sides of the coupler antenna (CC) and two sides of the card antenna CA.

A number of benefits may be attributable to the use of an extension antenna EA as a component of a booster antenna BA. Some variations of the extension antenna EA include how it is disposed with respect to the coupler coil CC component, as well as how it is disposed with respect to the card antenna CA component. The extension antenna EA may be a true coil, connected at at least one of its two ends to one or both of the coupler coil CC and card antenna CA. Its other end may also be connected to one or both of the coupler coil CC and card antenna CA, or may remain as a free end.

**FIG. 4E** is a diagram showing a booster antenna BA having a card antenna CA, a coupler coil CC and an extension antenna EA. These components may be formed (embedded in the card body CB) as one continuous embedded coil. The coupler coil CC is in the form of a closed loop.

The extension antenna EA (or extension coil, or extension loop) has one end extending from an end of the coupler coil CC, its other end is a free end. The extension antenna EA is disposed so as to have a portion adjacent two sides (or approximately 180°) of the coupler coil CC.

The card antenna CA may comprise one coil (without an inner winding IW and an outer winding OW as in some of the previous examples), and may have a free end. In this example, the coupler coil CC is a true coil, and has a cross-over.

This design features a low number of turns at the perimeter of the card body CB below the embossing area (or "5^{th} line" of embossing). The extension antenna (EA) may be disposed to have portions adjacent two sides of the coupler antenna (CC), and may have a free end.

In this example, the extension antenna EA has one end extending from the coupler coil CC and its other end may be a free end. The extension antenna EA may be disposed along two sides of the coupler antenna (CC).

### Booster Antenna BA components disposed primarily in the top half of the Card Body CB

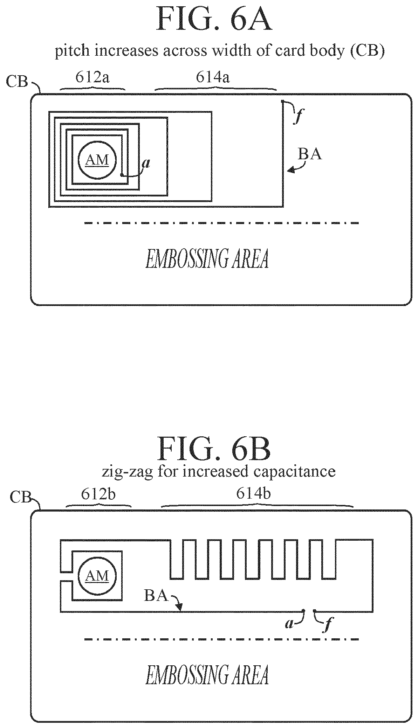

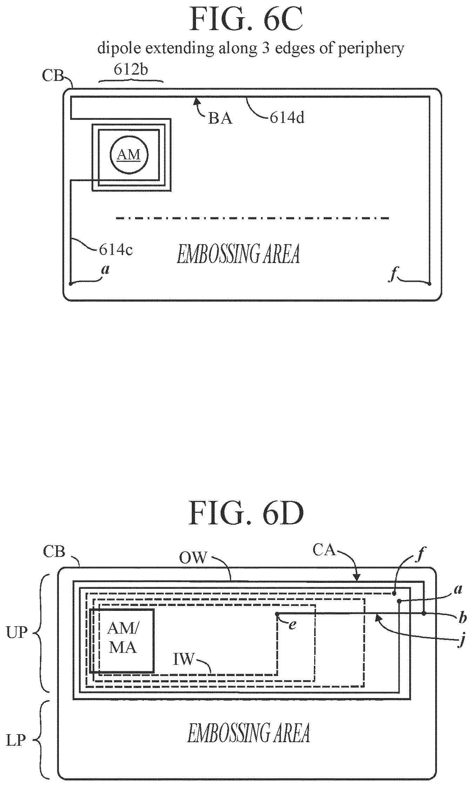

Reference is made to US 13600140 filed 30 Aug 2012 (now US 20130075477**),** particularly FIGs. 6A, B, C thereof, and also to US 61/697,825 filed 07 Sep 2012, particularly FIG. 6D thereof.

**FIG. 4F** shows that the booster antenna BA may extend around the peripheral area (142) of the card body CB, and also into the coupling area (144) and the residual area (148), while avoiding the embossing area (146). In this example, the coupler coil CC and extension antenna EA are essentially combined with one another, as a coil wherein the turns increase in pitch as the combined CC/EA booster antenna component extends across the residual area.

There is no true center to the coil formed by the combined coupler coil CC and extension antenna EA components, and the antenna module AM is positioned asymmetrically with respect to the combined CC/EA antenna component, and the degree of asymmetry can be varied by varying the pitch of the turns within the extension antenna (EA) in the area above the embossing area.

**FIG. 4G** is a diagram showing a booster antenna (BA) having a card antenna CA, a coupler coil CC and an extension antenna (EA). These components may be formed (embedded in the card body CB) as one continuous embedded coil.

The extension antenna EA has one end connected with an end of the coupler coil CC, its other end is a free end. The pitch (spacing between turns) of the extension antenna EA may be different than the pitch of the coupler coil CC. Both the extension antenna EA and coupler coil CC may have pitches different than that of the card antenna CA.

The coupler coil CC is shown as a "true" coil (closed loop), having a crossover. The extension antenna EA may be connected at one end to one end of the coupler coil CC, the other end of the extension antenna EA may be a free end (not connected to another booster antenna BA component. The extension antenna EA may not have a cross-over. The extension antenna EA may have a pitch (spacing between adjacent turns) which is different than that of the coupler coil CC, and the pitch can be selected in order to vary the capacitance of the extension antenna (EA) and hence tune the resonance frequency of the booster antenna (BA). The components of the booster antenna (BA) may be formed as a continuous wire embedded coil.

**FIG. 4H** is a diagram showing a booster antenna (BA) having a card antenna CA, a coupler coil CC and an extension antenna (EA). These components may be formed (embedded in the card body CB) as one continuous embedded coil.

The extension antenna EA has one end connected with an end of the coupler coil CC, its other end is a free end. The pitch (spacing between turns) of the extension antenna EA may be formed with varying pitches - for example, increasing in pitch towards its inner turns (versus its outer turns), for example a narrow pitch at the outer turns and a wider pitch at the inner turns of the extension antenna EA. The pitch of individual turns of the extension antenna EA may be adjusted to match the booster antenna (BA) resonance frequency.

**FIG. 4I** is an illustration of a booster antenna (BA) with card antenna CA, a coupler antenna (CC) and an extension antenna (EA). The antenna may be laid on the card body CB as a continuous embedded coil.

The extension antenna EA comprises two coils EA-1 and EA-2 which are connected in series with one another, as shown. One end of the coil EA-1 is connected with an end of the coupler coil CC, the other end of the coupler coil CC is a free end. The other end of the coil EA-2 is connected with a first end of the coil EA-2. The other end of the coil EA-2 is connected with an end of the card antenna CA, the other end of the card antenna CA is a free end. The two coils EA-1 and EA-2 of the extension antenna EA may be laid with the same sense (both clockwise), or with opposite senses (one clockwise, the other counter clockwise).

This concept can be applied to more than two extension antennas (EAs). The two or more extension antennas (EAs) may have independently different sizes, shapes, pitches and number of turns, and each one may have a varying (increasing or decreasing) pitch. The use of multiple extension antennas (EAs) allows for flexibility in the design of the extension antenna (EA) system in order to tune, including adjusting at least one of the inductance and the resonance frequency, of the booster antenna (BA). The use of multiple extension antennas (EAs) can ultimately improve the coupling between the booster antenna (BA) and the module antenna (MA).

In the embodiment of Fig. 4I disclosed herein, the booster antenna BA may be a continuous embedded coil(s) of wire. All of the antenna components may be formed from a single continuous length of wire. Some of the components, or some portions thereof may be formed from conductive tracks other than wire, such as by additive (e.g., printing) or subtractive (e.g., etching) processes.

### Some additional configurations of the coupler coil (CC)

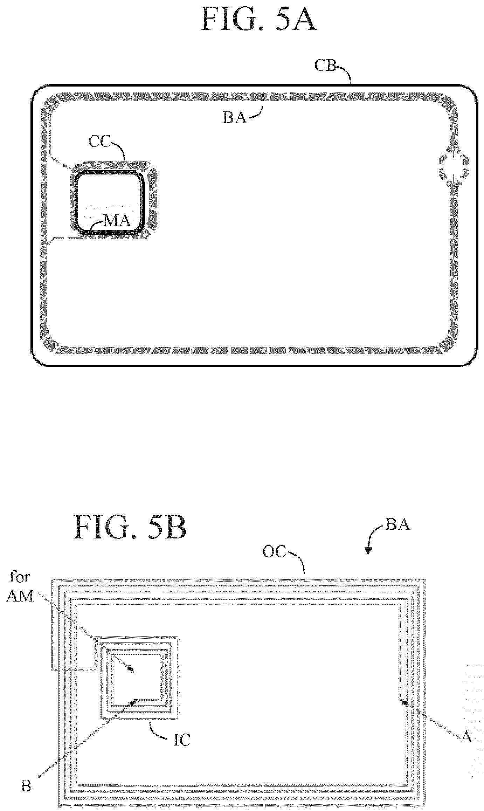

**FIG. 5A** shows a booster antenna BA with a coupler coil CC. Details such as outer winding OW and inner winding IW of the booster antenna BA are omitted, for illustrative clarity. An antenna module AM with module antenna MA may be mounted in the card body CB (not shown), as described above.

Here it can be observed that the middle of the antenna module AM, which may be nominally (typically) coincident with the center of the module antenna MA, is offset noticeably from (substantially non-coincident with) the middle (center) of the coupler coil CC.

The offset between the center of the module antenna MA from the center of the coupler coil CC need not be great to avoid any implication that they are substantially coincident (substantially concentric). First of all, the antenna module AM and its module antenna MA measure only approximately 8mm - 10mm on a side (square). One millimeter is a significant offset on this scale. Furthermore, whereas US 5,955,723 (Siemens, 1999) is adamant that the coupler coil (third loop) and module antenna (first loop) must be disposed "substantially concentrically", better coupling may be achieved by having the offset shown in **FIG. 5A****.** And the offset may facilitate overlapping of the module antenna MA with one or two sides of the coupler coil CC, for increased coupling therebetween. In **FIG. 5A** it may be observed that the module antenna MA overlaps the bottom and left sides of the coupler coil CC. (The module antenna MA and coupler coil CC are both somewhat rectangular, each having four sides.)

**FIG. 5B** is an illustration of a booster antenna (BA) with a coupler coil (CC) having a free end, and shows a booster antenna BA having an card antenna CA (peripheral portion) which may be referred to as an "outer coil" OC and a coupler coil CC (coupler portion) which may be referred to as an inner coil IC defines a coupling area for the antenna module AM (not shown). Overall, there are only two free ends - an end "A" of the outer coil OC, and an end "B" of the inner coil IC.

The outer coil OC is shown being laid from its end "A" counterclockwise CCW, from inner turn to outer turn, then after approximately 10 turns, heading inward to start laying the inner coil IC. The inner coil IC is shown being laid clockwise (CW), from an outer turn to an inner turn, then after approximately 20 turns ending at the point "B".

The sense CW of the inner coil IC is shown opposite from the sense CCW of the outer coil OC. They may, however, have the same sense.

The outer coil OC is shown being laid from innermost to outermost turn. Alternatively, it may be laid from outermost turn to innermost turn.

The inner coil IC is shown being laid from outermost turn to innermost turn. Alternatively, it may be laid from innermost turn to outermost turn.

The pitches for the inner coil IC and outer coil OC may be the same, or different than one another. The pitches for each of the inner coil IC and outer coil OC may be non-uniform, including progressive, such as increasing from turn-to-turn from inner to outer turns of the respective coil.

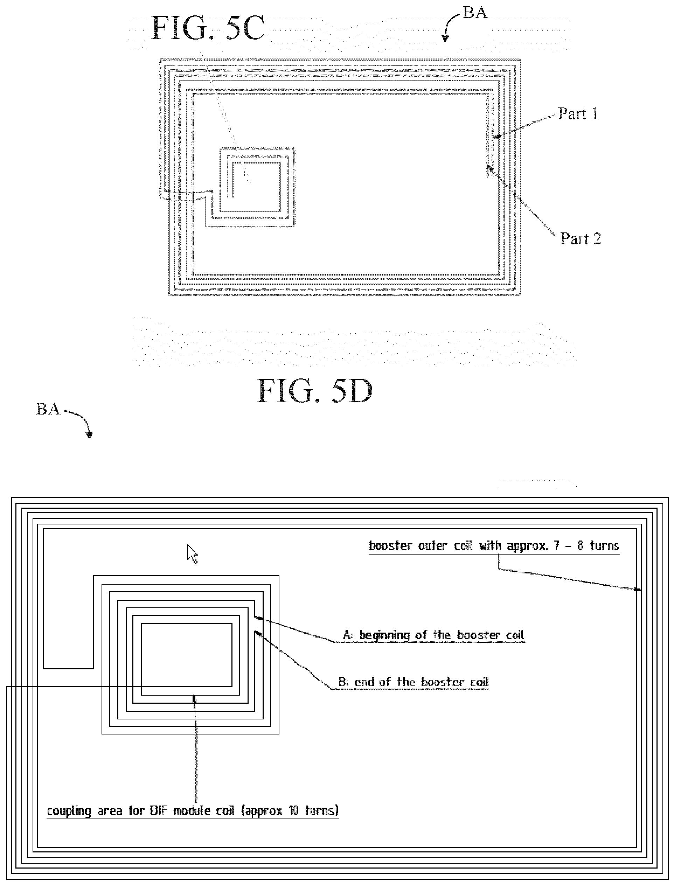

**FIG. 5C** shows a booster antenna BA having two windings or parts, designated "Part 1" and "Part 2". Each of these parts has two free ends, and has an outer peripheral portion and an inner coupling portion.

The outer peripheral portion of each part may be laid from its end, counterclockwise CCW, from an inner turn to an outer turn, then after approximately 5 turns, thereafter heading inward to start laying the inner portion. The inner portions are shown being laid also counterclockwise CCW, from an outer turn to an inner turn, then after approximately 10 turns ending at the point "B". The number of turns is merely illustrative, and the senses can be reversed.

The two parts - Part 1 and Part 2 - may be realized interleaved (as illustrated) on the same surface of a substrate (card body CB), or on opposite sides of the substrate, or on two layers of a multi-layer substrate. The two parts may be substantially identical with one another.

**FIG. 5D** shows that a peripheral portion of the booster antenna BA may have no free ends (it is continuous), and the coupler coil CC may have two free ends. This configuration may be laid starting at point A, at an interior turn of the coupler coil CC, proceeding counterclockwise CCW and outward to an outer turn of the coupler coil CC, moving towards the periphery of the card body CB and proceeding clockwise CW, laying the peripheral portion of the booster antenna BA from inside turn to outside turn, then returning to the interior of the card body CB to complete laying the coupler coil CC from an inner turn, proceeding counterclockwise CCW to the interior turn and ending at a point B on the interior turn (which may be the same interior turn as point A). Points A and B are the two free ends of the single wire (or conductive track) forming the booster antenna BA. The outer portion may comprise approximately 7-8 turns, the inner portion may comprise approximately 10 turns.

Other alternative designs are possible. For example, connecting ends of the module antenna MA to a portion or end of the booster antenna BA or coupler coil CC (or similar portion of a booster antenna BA.

### A "folded" coupler coil

US 61841286 discloses a "folded" coupler coil. See FIGs. 5A, 5B therein.

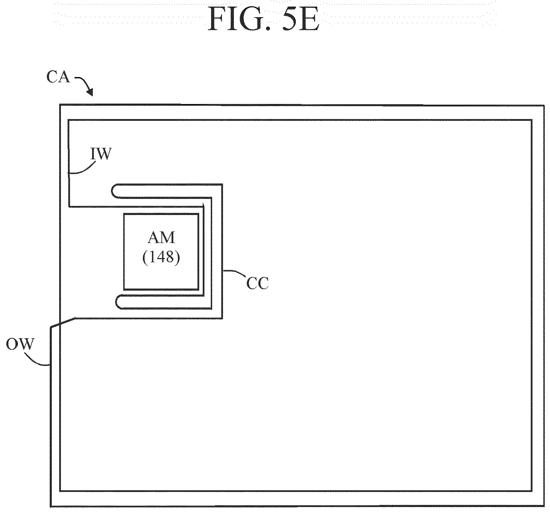

**FIG. 5E** shows a booster antenna BA and its coupler coil component CC. The coupler coil CC in this example has two ends, several windings, and may be formed by embedding a wire nearly all (such as approximately three-quarters of the way of the way around a coupling area (144), the reversing direction and going back to the starting position, then reversing position and again going three-quarters of the way around the coupling area, and so forth.

The card antenna CA of the booster antenna BA is shown having only a few turns, for illustrative clarity, and exhibits a cross-over. The coupler coil CC is shown without a cross-over, one end of the coupler coil CC being connected to an inner winding of the card antenna CA, the other end of the coupler coil CC being connected to an outer winding of the card antenna CA.

### A compound booster antenna (BA)

**FIGs. 5F****,G,H** illustrate forming two booster antennas, each having a partial coupler coil, in two different planes, such as one booster antenna on each of two opposite sides of the card body (substrate), or on two separate layers which may then be laminated together.

FIG. 5I shows that a first booster antenna BA-1 may be formed on one side of the card body CB with its coupler coil component CC-1 encircling the top half (approximately 180°) of the antenna module AM. FIG. 5J shows that a second booster antenna BA-2 may be formed on the opposite side of the card body CB with its coupler coil component CC-2 encircling the bottom half (approximately 180°) of the antenna module AM

Each of the booster antennas BA-1, BA-2 may comprise an outer winding OW and inner winding IW, and may have two free ends "a" and "f". The free ends (a, f) of the booster antennas BA-1, BA-2 are shown towards the bottom of the right edge of the card body CB.

**FIGs. 5F** and **5G** show an embossing area (in dashed lines) on the bottom portion of the card body CB, which is an area "reserved" for embossing, in which the booster antennas BA-1 and BA-2 should not encroach. They may however pass along (just inside of) the bottom edge of the card body CB.

**FIG. 5H** shows that in combination with one another, the two booster antennas BA-1 and BA-2 provide full enclosure (approximately 360°) of the antenna module AM. In FIG. 5K, the card body (CB) and antenna module (AM) are omitted, for illustrative clarity. The two booster antennas BA-1 and BA-2 may constitute what may be referred to as a "composite booster antenna".

It should be understood that in various ones of the configurations for booster antennas shown herein that booster antennas other than **FIG. 2** type quasi-dipole (Q-D) booster antenna (BA) may be employed to achieve the desired enclosure of the antenna module AM and consequent improvements to coupling between the module antenna and the booster antenna.

### Some additional arrangements of a Booster Antenna (BA)

In the following examples, the antenna module (AM) is disposed on the upper portion of the card body (CB) of a smart card, in a conventional manner, and the booster antenna (BA) is also disposed primarily (substantially, including fully) on the upper portion of the card body (CB). The lower portion (Embossing Area) of the card body CB is "reserved" for embossing, and other than a small area at the perimeter is generally not available for a booster antenna.

**FIG. 6A** (similar to **FIG. 4F****)** illustrates a smart card having a card body CB, an antenna module AM disposed in the upper portion of the card body CB. A booster antenna BA is generally in the form of a rectangular spiral of wire (or other conductive material), having two free ends "a" and "f". Only a representative few turns of the booster antenna BA are illustrated.

A portion 612a of the booster antenna BA is closely spiraled around the antenna module AM in the manner of the coupler coils (CC) described hereinabove with respect to **FIGs. 3**, 3A-3D. This "coupler portion" 612a of the booster antenna BA may have a relatively small pitch. Although the coupler portion 612a is shown as being at one end portion of the overall booster antenna BA, it may be created at a portion, such as a midsection of the booster antenna BA.

A remaining portion 614a of the booster antenna BA has a pitch that may increase across the width of the card body. The general idea is that the booster antenna BA may cover substantially the entire width of the card body. Since the width of the card body is greater than its height, even more so when comparing the width of the card body with the height of the upper portion only, there is more room in the width dimension for the turns of the booster antenna to spread out, and this area may be advantageously utilized.

If the coupler portion 612a were formed at a midsection of the overall booster antenna BA (rather than at one end, as shown), the remaining portion 614a of the booster antenna would have two portions (or "poles") extending from the coupler portion 612a, forming a kind of dipole antenna. This would be analogous to the **FIG. 3** type booster antenna, described as a "quasi-dipole" which has an outer winding OW and an inner winding IW extending from a more-or-less central coupler coil CC.

**FIG. 6B** illustrates a smart card having a card body CB, an antenna module AM disposed in the upper portion of the card body CB. A booster antenna BA is generally in the form of a rectangular loop of wire (or other conductive material), having two free ends "a" and "f". Only a representative few turns of the booster antenna BA are illustrated.

A portion 612b of the booster antenna BA, which may be referred to as a "coupler portion", is closely spiraled around the antenna module AM in the manner of the coupler coils (CC) described hereinabove with respect to **FIGs. 3**, 3A -3D.

A remaining portion 614b of the booster antenna BA extends across the width of the card body, and includes a portion which is formed with a zig-zag, for improved capacitance. This remaining portion 614 may exhibit a spiral pattern.

In the examples of **FIGs. 6A** and **6B****,** the booster antenna BA is illustrated disposed entirely within the upper portion of the card body CB, not encroaching on the lower embossing area. However, it is evident that the ends "a" and "f' of the booster antenna(s) could extend into the embossing area.

**FIG. 6C** illustrates a smart card having a card body CB, an antenna module AM disposed in the upper portion of the card body CB. A booster antenna BA is generally in the form of a rectangular loop of wire (or other conductive material), having two free ends "a" and "f". Only a representative few turns of the booster antenna BA are illustrated.

A portion 612c of the booster antenna BA, which may be referred to as a "coupler portion", is closely spiraled around the antenna module AM in the manner of the coupler coils (CC) described hereinabove with respect to **FIGs. 3**, 3A -3D.

In this example, the coupler portion 612c is shown formed at a midsection of the overall booster antenna BA (rather than at one end, as shown), and there are two remaining portions 614c, 614d of the booster antenna BA extending from the coupler portion 612c, forming a kind of dipole antenna. This is somewhat analogous to the **FIG. 2** type booster antenna, described as a "quasi-dipole" which has an outer winding OW and an inner winding IW extending from a more-or-less central coupler coil CC.

The remaining portion 614c extends from one end of the coupler portion 612c along a side edge (left side, as viewed) of the card body CB into the embossing area. (This is acceptable to have a portion of the booster antenna BA in a peripheral region only of the embossing area.)

The remaining portion 614d extends from the other end of the coupler portion 612c along the top edge of the card body CB to the right (as viewed) side edge thereof, thereafter extending down the right edge of the card body CB into the embossing area.

The booster antenna BA with remaining portions 614c and 614d extending from the two ends of the coupler portion 612c) forms a kind of dipole antenna which is somewhat analogous to the **FIG. 2** type booster antenna.

**FIG. 6D** shows a configuration for a card antenna CA having an outer winding OW and an inner winding IW. The card antennas described hereinabove occupy substantially the entire peripheral portion of the card body CB, the card antenna CA is disposed within and near all four (top, right, left, bottom) edges of the card body CB.

The card antenna CA may be configured as quasi-dipole with inner and outer windings (IW/OW), the outer end "b" of OW connected via jumper "j" to inner end "e" of IW, the inner end "a" of OW and outer end "f' of IW are free ends.

The module antenna MA of antenna module AM may overlap only a portion of the inner winding IW. There is no distinct coupler coil CC. The "center" of any given windings of the OW and IW of the card antenna CA is outside of the area of the antenna module AM

The pitch of the turns of the outer winding OW and/or inner winding IW may vary (such as increase) across the width of the card body CB, as illustrated.

### Some characteristics of the Booster Antenna and its components

The booster antenna BA and its various components may be formed of various size wire ranging, for example, from approximately 50µm to 112µm in diameter. A single continuous wire may be modified, such as with a conductive coating to have different diameters for different ones of the booster antenna components. Flat wire can also be used, and may be beneficial for booster antenna components which may extend into the embossing area (146). Wires having different resistances, or a single continuous wire having portions with different resistances may be used for the various components of the booster antenna.

The number of turns and the spacing of the turns of the booster antenna BA and its various components may be varied to control characteristics of the booster antenna BA and its performance.

### Distinguishing over some of the Prior Art

US 5,955,723 (Siemens; 1999) discloses a contactless chip card having a first conductor loop connected to the semiconductor chip and at least one second conductor loop with approximately the dimensions of the data carrier, and a region forming a third loop with approximately the dimensions of the first conductor loop. Inductive coupling is described.

In the Siemens patent, there is no disclosure of an additional antenna extension (EA), nor is there any disclosure of the conductor loops (comparable to the "booster antenna" BA described herein) components extending into the embossing area (146) or into the residual area (148) (or embossing are) of a card body (CB), as disclosed herein.

US 8,130,166 (Assa Abloy; 2012) discloses a coupling device is formed by a continuous conductive path having a central section in the form of a small spiral and two extremity sections which are formed as large spirals. The pitches of the large spirals are chosen such that the large spirals have mainly a capacitive behavior. The pitch of the small spiral is chosen such that the small spiral has mainly an inductive behavior.

In the Assa Abloy patent, the large spirals appear to be in the peripheral area (142), and the small spiral appears to be in the coupling area (144). There is no disclosure of an additional antenna extension (EA), nor is there any disclosure of the coupling device (comparable to the "booster antenna" BA described herein) components (small and large spirals) extending into the embossing area (146) or into the residual area (148) (or embossing are) of a card body (CB), as disclosed herein.

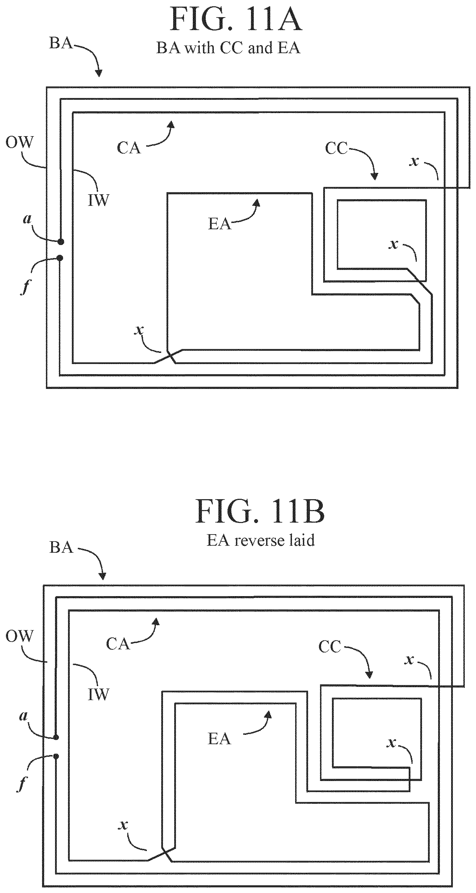

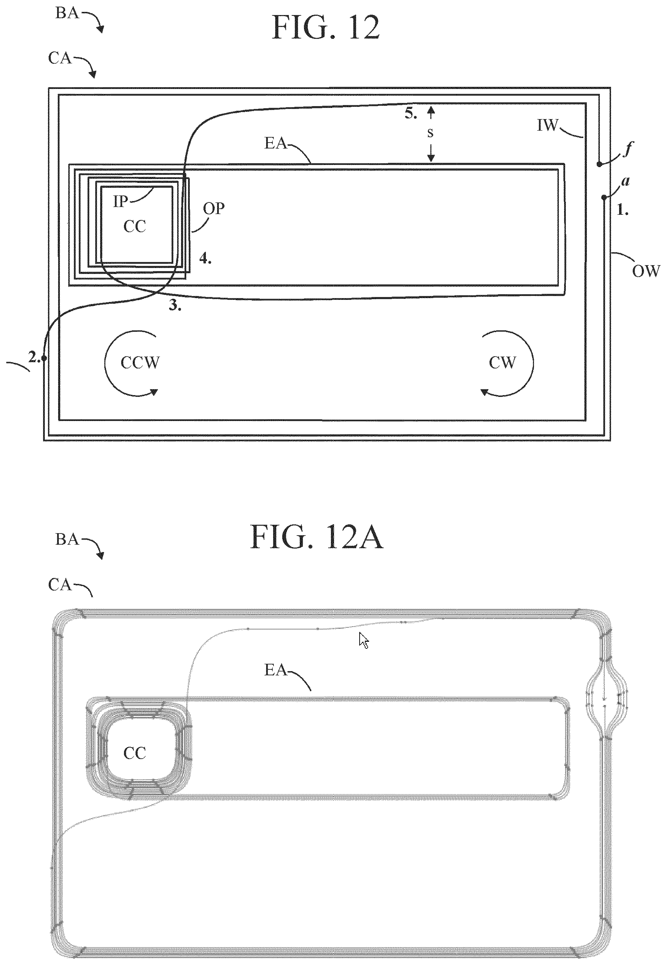

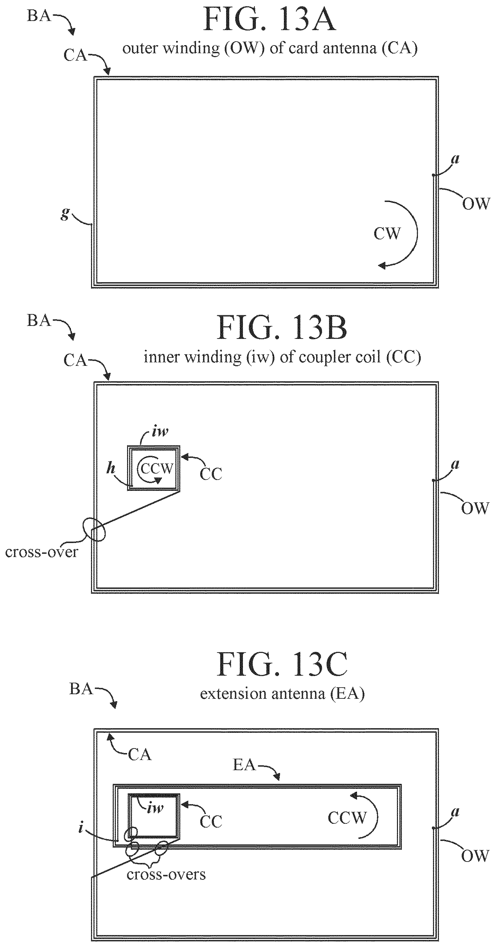

US 20130146671 (Infineon; 2013) discloses a booster antenna structure for a chip card, which may include an additional electrically conductive structure connected to the booster antenna. The additional electrically conductive structures disclosed therein are principally capacitive structures. FIG. 11A (for example) shows a booster antenna structure with a finger capacitor. FIG. 12A (for example) shows a booster antenna structure with a spiral capacitor. FIG. 12B (for example) shows a booster antenna structure with a dummy turn as capacitor. FIG. 13A shows a meander shape (the additional electrically conductive structure may have a meander structure). The structures which form the capacitor, and the booster antenna structure, may be arranged in the same plane. In this case, no additional structural layer is required in which one of the components is arranged separately, but both the structures forming the capacitor and the booster antenna structure may be formed in a forming process on the same layer, i.e. in the same plane, that is to say, for example, on one or on two sides of the carrier on which the booster antenna structure is arranged. The capacitor may also be configured as line capacitor and arranged, for example, as dummy turn. The dummy turn may have two conductor tracks extending next to one another, the winding direction of the two conductor tracks being opposite with respect to one another so that the dummy turn does not supply any or a negligible contribution to the inductance of the booster antenna structure.

The turns or tracks of the additional electrically conductive structure(s) in the Infineon publication do not cross over one another. Therefore, they do not form a "true" coil which would contribute to the inductance of the booster antenna. Compare US 8130166 (Assa Abloy; 2012) which shows (FIGs. 3, 5, 6 therein) crossovers for all of their spirals (booster antenna components). In the present invention, the antenna extension EA is in the form of a "true" coil, involves at least one crossover, and contributes to the inductance of the booster antenna BA.

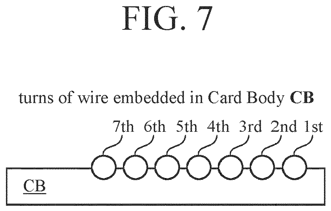

The Infineon publication discloses various embodiments, a booster antenna structure for a chip card is provided, wherein the booster antenna structure may include a booster antenna; and an additional electrically conductive structure connected to the booster antenna. Attention may be directed to FIGs. 7, 8B, 9, 12A, 12B, and 13-15 therein, wherein:
FIG. 7 shows a section of a booster antenna structure according to various embodiments;
FIG. 9 shows a circuit diagram of a system of reading unit and a contactless chip card module arrangement according to various embodiments;
FIG. 9 shows a circuit diagram 900 of a system having a reading unit 902 (also called PCD (proximity coupling device)) and a contactless chip card module arrangement 904 (also called PICC (proximity integrated circuit card)) ... The chip card module 908 has an off-chip coil 918 which is connected to the chip which is modeled by a parallel circuit of an on-chip capacitor 920 and an on-chip resistor 922, the latter representing the ohmic consumption of the chip ... The booster antenna structure 906 is represented by a resonant circuit in the form of a series circuit which has a booster antenna coil 912, a booster capacitor 914 and an additional electrically conductive structure, for example a booster resistor 916. In the circuit of the booster antenna structure 906, the booster resistor 916 may also be connected alternatively in parallel with the arrangement which has the booster antenna coil 912 and the booster capacitor 914.

Claim 1 is directed to a booster antenna structure for a chip card, wherein the booster antenna structure comprises: a booster antenna; and an additional electrically conductive structure connected to the booster antenna.

FIG. 12A shows a booster antenna structure according to various embodiments with a spiral capacitor;

FIG. 12B shows a booster antenna structure according to various embodiments with a dummy turn as capacitor;

A further possible form which the capacitance can have is shown in FIG. 12A. To illustrate, the booster antenna structure 1200 is here also represented by only one turn 1202 and connected to a spiral capacitor 1204. A spiral capacitor 1204 may be understood in various embodiments to be a capacitor which has two conductor tracks forming a conductor track string and extending next to one another, the conductor track string being rolled together to form a spiral. In this arrangement, the spiral does not need to have a circular shape, it can also be oval or a polygon having rounded corners. The capacitance value of the spiral capacitor is adjustable, for example by adapting parameters which have already been mentioned in conjunction with the finger capacitor.

Another further possible shape which the capacitance can have is shown in FIG. 12B. The booster antenna structure 1210 has three turns 1212 in this case. Furthermore, the end of the inner turn of the turns 1212 of the booster antenna structure 1210 is followed by an inductive coupling area 1216 which is surrounded by coupling turns 1218. The, for example, three coupling turns 1218 are here formed from an extension of one end of an inner turn of the turns 1212 of the booster antenna structure 1210. The end of the conductor track formed by the coupling turns 1218 is followed by a dummy turn 1214 which forms the capacitor. The dummy turn 1214 has two conductor tracks extending in parallel next to one another, the first conductor track 1220 being coupled to the end of the conductor track which forms the coupling turns 1218 and the second conductor track 1222 being coupled to the end of the outer turn of the turns 1212 of the booster antenna structure 1210. The first conductor track 1220 and the second conductor track 1222 have an opposite direction of circulation with respect to one another. The ends of the first conductor track 1220 and of the second conductor track 1222 are open or are not connected to any other structure analogously to the end of the conductor track double string which forms the spiral capacitance 1204 in FIG. 12A. The double string which is formed by the first conductor track 1220 and the second conductor track 1222 as such hastwo turns, wherein its course can deviate from the course shown in FIG. 12B and can be matched to unoccupied areas in the plane of the booster antenna structure 1210 or to areas to be kept free which, for example, are reserved for embossed lettering.

### Controlling Force and Ultrasonic Power during Wire Embedding

An embedding head (or tool) for embedding the wire for the booster antenna BA and its various components in the substrate may comprise an ultrasonic transducer (or sonotrode) vibrating a capillary tube through which the wire being embedded extends (or is fed) onto the surface of the substrate. By imparting an ultrasonic vibration of the tool while applying a downward force (urging the tool downward, with a force), the wire may be caused to embed itself, at least partially, into the surface of the card body CB substrate. Reference may be made to US 6,698,089 (2004; Finn et al) and US 6,233,818 (2001; Finn et al) which disclose embedding wire in a substrate using a sonotrode. See, for example, **FIGs. 1** **and** **3** of the '089 patent.

The booster antenna (BA) (and any of its components CA, OW, IW, CC, AE) may comprise several turns of wire embedded very close to one another. When embedding the several turns of a booster antenna (BA), notably the peripheral card antenna (CA) portion thereof, it may be appreciated that the first turn of wire may be embedded in the "native" substrate of the card body (CB), and may interfere (resisting or blocking, in a manner of speaking) with the embedding of subsequent turns of the booster antenna (BA).

**FIG. 7** shows the cross-section of a typical coil (booster antenna component) embedded on a substrate of a card body CB and shows the sequence used to scribe the 7 coil windings. A first (1^{st}) turn may be laid or embedded in the card body CB, followed by a second (2^{nd}) turn, followed by a third (3^{rd}) turn, followed by a fourth (4^{th}) turn, followed by a fifth (5^{th}) turn, followed by a sixth (6^{th}) turn, followed by the final seventh (7^{th}) turn. Evidently, when the second and subsequent turns are being embedded, the process can be resisted by the first and other previously-embedded turns.

### Coupler Coil (CC) with inner and outer windings

As mentioned in conjunction with the booster antenna (BA) shown (for example) in **FIG. 2****,** a single antenna component (such as the peripheral card antenna CA) may comprise two windings, such as an inner winding and an outer winding.

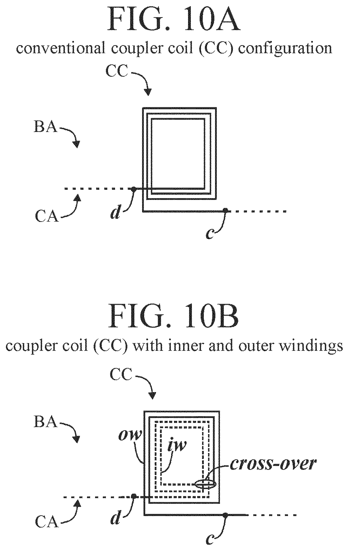

**FIGs. 10A****,B** are diagrams of some coupler coil (CC) configurations for a booster antenna (BA). The coupler coil CC may be configured in various ways to increase a coupling factor between the coupler coil CC component of the booster antenna BA and the module antenna MA of the antenna module AM

**FIG. 10A** shows a configuration of a conventional (typical) coupler coil CC in the form of a flat coil having number (such as ten) of turns, and two ends **"*c*"** and "***d***". The booster antenna BA extending around the periphery of the card body is illustrated with only one turn, for illustrative clarity. The coupler coil CC may have, for example, approximately 10 turns of wire, in a flat spiral pattern.

**FIG. 10B** shows a coupler coil CC having inner and outer windings. Starting at one end "***d***" of the coupler coil CC, an inner winding ***iw*** (or inner portion **IP,** shown in dashed lines) has approximately 5 turns of wire and is wound (laid) in a counter clockwise direction from outside-to-inside, then jumps over itself (over previously laid turns) at a "cross-over", and an outer winding ***ow*** (or outer portion **OP,** shown in solid lines) has approximately 5 turns of wire and is wound (laid) in a counter clockwise direction from inside-to-outside, then terminates at the other end "c". It should be understood that the coupler coil CC could be wound from **"*c*"** to "***d***", rather than from "***d***" to **"*c*",** and other variations may be implemented. The inner and outer windings ***iw*** and *ow* may have substantially the same number of turns, five each. Fewer turns are shown in the figure, for illustrative clarity.

### Some Configurations of Booster Antenna (BA) Components

**FIGs. 11A - 11F** show various exemplary configurations of a booster antenna **BA.**

The booster antenna **BA** may comprise various antenna components, such as (but not limited to):
- a card antenna **CA** component extending around a periphery of the card body (CB, not shown , see **FIG. 1****)** for coupling with an external contactless reader (see **FIG. 1****),**
   - the card body **CA** component may comprise an outer winding **OW** and an inner winding **IW** (see FIG. 1B)
- a coupling coil **CC** component disposed at an interior position (area) of the card body (CB), corresponding with a position for the antenna module (AM, not shown) for coupling with the module antenna (MA, not shown) of the antenna module (AM), and
- an extension antenna (or extension coil) **EA** component.

The components **CA, CC, EA** of the booster antenna **BA** may be interconnected, as shown. The components of the booster antenna may comprise wire which is laid in a continuous path, from a starting point "***a***" to a finishing point "***f***" (or vice-versa). In some of the examples, the "sense" or laying direction (either clockwise **CW,** or counter clockwise **CCW)** of the various components may be the same, or different than (e.g., opposite from) the sense of other components. Some of the components may be "true coils" which may form a complete loop having a crossover "***x***" and contributing to the inductive coupling of the booster antenna **BA.** The overall booster antenna **BA** may have two or more crossovers "***x***". The various components may each be shown with only a few turns, for illustrative simplicity, and are generally laid in a flat rectangular spiral pattern having a number (generally two or more) "turns". One of the turns, or a portion thereof, may be an "innermost" turn of the booster antenna component. Another of the turns, or a portion thereof, may be an "outermost" turn of the booster antenna component.

Some characteristics and advantages of the various configurations shown in **FIGs. 11A** - **11F** may include, but are not limited to ...
- altering the Q-factor of the booster antenna/module antenna system by altering the winding direction of one or more components (elements) making up the booster antenna BA
- winding one or more turns of the coupler coil CC in the opposite direction to the majority of the turns, with substantially no increase in DC resistance, but counter-winding may broaden the resonance curve and reduce Q-factor, and there may be no power loss as would be the case if a resistor introduced
- winding one or more turns of the booster antenna BA in the opposite direction to the majority of the turns
- winding one or more turns of the extension antenna EA in the opposite direction to the other extension antenna EA turns, or winding the entire extension antenna EA in the opposite direction to the inner and outer windings (IA, OW) of the booster antenna BA.

**FIG. 11A** shows a configuration for the booster antenna BA wherein from the starting point "***a***", the wire commences being laid in a clockwise **CW** direction forming outer windings (OW) of the card antenna CA (from an innermost turn to an outermost turn), then crosses over "***x***" itself and heads towards the interior of the card body (CB) whereat the coupler coil CC may be formed with turns of wire laid in the counter clockwise **CCW** direction (from an outermost turn to an innermost turn), then crosses over "***x***" itself and heads towards the periphery of the card body (CB) for laying the extension antenna EA in a clockwise **CW** direction (from an outermost turn to an innermost turn), then the wire crosses over then crosses over "***x***" itself and heads towards the periphery of the card body (CB) for laying the inner windings (IW) of the card antenna CA which may be laid in a clockwise **CW** direction (from an innermost turn to an outermost turn), until the finishing point "***f***". The entire sequence may be performed in reverse, starting at the point "***f***" and finishing at the point "***a***".

**FIG. 11B** shows a configuration for the booster antenna BA wherein from the starting point "***a***", the wire commences being laid in a clockwise **CW** direction forming outer windings (OW) of the card antenna CA (from an innermost turn to an outermost turn), then crosses over "***x***" itself and heads towards the interior of the card body (CB) whereat the coupler coil CC may be formed with turns of wire laid in the counter clockwise **CCW** direction (from an outmost turn to an innermost turn), then crosses over "***x***" itself and heads towards the periphery of the card body (CB) for laying the extension antenna EA in a counter clockwise **CCW** direction (from an outermost turn to an innermost turn), then the wire crosses over then crosses over "***x***" itself and heads towards the periphery of the card body (CB) for laying the inner windings (IW, compare FIG. 1B) of the card antenna CA which may be laid in a clockwise **CW** direction (from an innermost turn to an outermost turn), until the finishing point "***f***". The entire sequence may be performed in reverse, starting at the point "***f***" and finishing at the point "***a***".

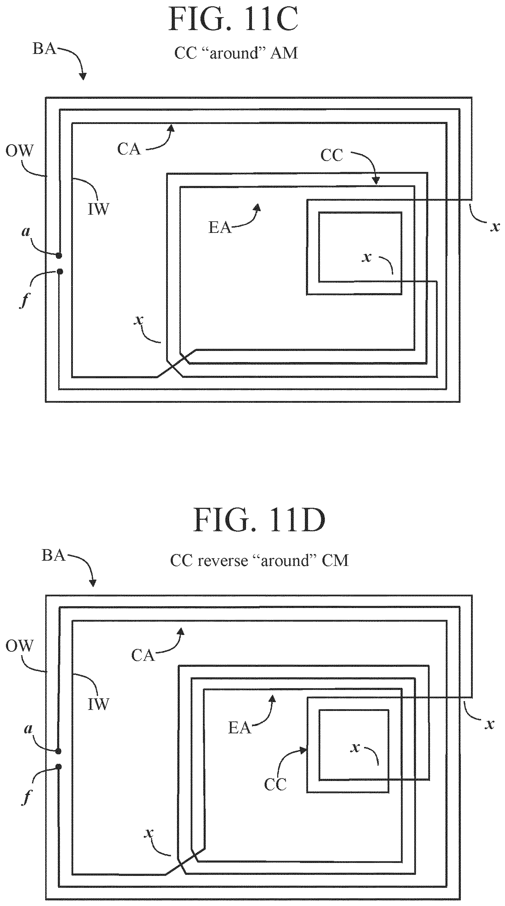

**FIG. 11C** shows a configuration for the booster antenna BA wherein from the starting point "***a***", the wire commences being laid in a clockwise **CW** direction forming outer windings (OW) of the card antenna CA (from an innermost turn to an outermost turn), then crosses over "***x***" itself and heads towards the interior of the card body (CB) whereat the coupler coil CC may be formed with turns of wire laid in the counter clockwise **CCW** direction (from an outermost turn to an innermost turn), then the wire crosses over "***x***" itself and heads towards the periphery of the card body (CB) for laying the extension antenna EA in a clockwise **CW** direction (from an outermost turn to an innermost turn), then the wire crosses over "***x***" itself and heads towards the periphery of the card body (CB) for laying the inner windings (IW) of the card antenna CA which may be laid in a clockwise **CW** direction (from an innermost turn to an outermost turn), until the finishing point "***f***". The entire sequence may be performed in reverse, starting at the point "***f***" and finishing at the point "***a***".

**FIG. 11D** shows a configuration for the booster antenna BA wherein from the starting point "***a***", the wire commences being laid in a clockwise **CW** direction forming outer windings (OW) of the card antenna CA (from an innermost turn to an outermost turn), then crosses over "***x***" itself and heads towards the interior of the card body (CB) whereat the coupler coil CC may be formed with turns of wire laid in the counter clockwise **CCW** direction (from an outermost turn to an innermost turn), then the wire crosses over "***x***" itself and heads towards the periphery of the card body (CB) for laying the extension antenna EA in a counter clockwise **CCW** direction (from an outermost turn to an innermost turn), then the wire crosses over "***x***" itself and heads towards the periphery of the card body (CB) for laying the inner windings (IW) of the card antenna CA which may be laid in a clockwise CW direction (from an innermost turn to an outermost turn), until the finishing point "***f***". The entire sequence may be performed in reverse, starting at the point "***f***" and finishing at the point "***a***".

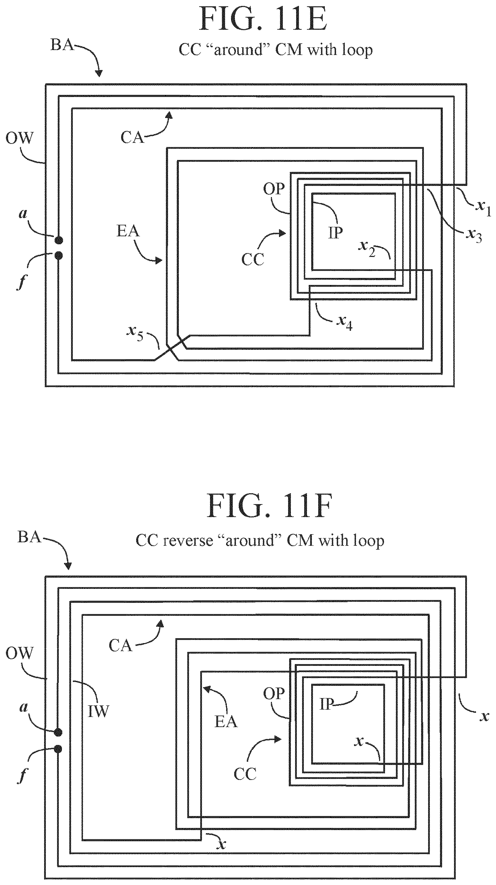

**FIG. 11E** shows a configuration for the booster antenna BA wherein from the starting point "***a***", the wire commences being laid in a clockwise **CW** direction forming outer windings (OW) of the card antenna **CA** (from an innermost turn to an outermost turn), then crosses over "***x***" (x1) itself and heads towards the interior of the card body **(CB)** whereat an inner portion **IP** of the coupler coil **CC** may be formed with turns of wire laid in the counter clockwise **CCW** direction (from an outermost turn to an innermost turn), then the wire crosses over "***x***" (x2) itself and heads towards the periphery of the card body (CB) for laying the extension antenna EA in a clockwise **CW** direction (from an outermost turn to an innermost turn), then the wire crosses over "***x***" (x3) itself for laying an outer portion OP of the coupler coil CC with turns of wire laid in the clockwise **CW** direction (from an outermost turn to an innermost turn), then the wire crosses over "***x***" (x4, x5) itself and heads towards the periphery of the card body (CB) for laying the inner windings **(IW,** compare FIG. 1B) of the card antenna CA which may be laid in a clockwise **CW** direction (from an innermost turn to an outermost turn), until the finishing point "***f***". The entire sequence may be performed in reverse, starting at the point "***f***" and finishing at the point **"*a*".**

**FIG. 11F** shows a configuration for the booster antenna BA wherein from the starting point **"a",** the wire commences being laid in a clockwise **CW** direction forming outer windings (OW) of the card antenna CA (from an innermost turn to an outermost turn), then crosses over **"x"** itself and heads towards the interior of the card body (CB) whereat an inner portion **IP** ("***iw***") of the coupler coil CC may be formed with turns of wire laid in the counter clockwise **CCW** direction (from an outermost turn to an innermost turn), then the wire crosses over "**x**" itself for laying the extension antenna EA in a counter clockwise **CW** direction (from an outermost turn to an innermost turn), then the wire crosses over "***x***" itself for laying an outer portion **OP ("*ow*")** of the coupler coil CC with turns of wire laid in the counter clockwise **CCW** direction (from an outermost turn to an innermost turn), then the wire crosses over "**x**" itself and heads towards the periphery of the card body (CB) for laying the inner windings (IW) of the card antenna CA which may be laid in a clockwise **CW** direction (from an innermost turn to an outermost turn), until the finishing point **"f".** The entire sequence may be performed in reverse, starting at the point "**f**" and finishing at the point "**a**".

The following table presents the "laying" senses of the various components CA (OW, IW), CC, EA of the booster antenna BA. (The OW and IW may have the same sense as one another.)

| | **OW of CA** | **CC** | **EA** | **IW of CA** |
|---|---|---|---|---|
| **FIG. 11A** | CW | CCW | CW | CW |
| **FIG. 11B** | CW | CCW | CCW | CW |
| **FIG. 11C** | CW | CCW | CW | CW |
| **FIG. 11D** | CW | CCW | CCW | CW |
| **FIG. 11E** | CW | (IP) CCW | CW | CW |
| | | (OP) CW | | |
| **FIG. 11F** | CW | (IP) CCW | CCW | CW |
| | | (OP) CCW | | |

Although not specifically directed to the antenna module AM, the configurations of and improvements to booster antennas disclosed herein may provide for improved coupling of the booster antenna BA with the antenna module AM, and consequent improvements in "read distance" and "activation distance".

A booster antenna (BA) may comprise a card antenna (CA) component disposed around a periphery of a card body (CB) and comprising an inner winding (IW) and an outer winding (OW); a coupler coil (CC) component disposed at a location for an antenna module (AM) on the card body (CB); and an extension antenna (EA) component; and wherein at least one of the components is laid having a sense which is opposite to one or more of the other components. At least some of the components may have innermost and outermost turns; at least one of the components is laid from an innermost turn to an outermost turn; and at least another of the components is laid from an outermost turn to an innermost turn.

### Some Additional Examples of the Booster Antenna (BA)

**FIG. 12** shows diagrammatically, and **FIG. 12A** shows more "realistically", an example of a booster antenna BA comprising a coil antenna CA component having an inner winding IW and an outer winding OW, a coupler coil component CC having an inner portion IP (or inner winding "iw") and an outer portion OP (or outer winding "ow"), and an extension antenna EA component. (The extension antenna EA in this example is shown having a single multi-turn winding, but it could be formed with an inner and outer winding.)

The booster antenna BA may comprise insulated wire, embedded in the card body CB. Each component may have a number of turns, non-limiting examples of which are given. The booster antenna BA may be laid (embedded), as follows. The number of turns, sense (clockwise, counter clockwise), and order of laying the turns and/or windings of the various booster antenna BA components - such as the inner winding IW and outer winding OW of the card antenna CA component, the inner portion IP and outer portion OP of the coupler coil CC component, and (optionally) the inner and outer windings of the extension antenna EA component) - are exemplary, and may be changed, reversed, or done in a different order, and some of these elements or portions thereof may be omitted. A booster antenna BA formed by an additive or subtractive process, resulting in traces of conductors, may exhibit a similar arrangement to the embedded wire-based booster antenna BA described herein.

In a first step **(1),** at a point "***a***" which may be a first end of the overall booster antenna **BA,** start laying (routing, embedding) the outer winding **OW** of the card antenna **CA** component in a clockwise **CW** direction, for 3 or 4 turns around (just inside of) the perimeter of the card body CB, from an innermost turn to an outermost turn thereof. (The diagrammatic view of **FIG. 12** may show fewer numbers of turns, for the various booster antenna components, for illustrative clarity.)

In a next step **(2),** stop embedding, jump over the already laid turns of the outer winding **OW,** to the interior (coupling area, 144) of the card body **CB,** and lay the inner portion **IP** (or inner winding "***iw***") of the coupler coil **CC** component in a counter clockwise **CCW** direction, such as for 8 - 10 turns, from an outermost turn to an innermost turn thereof.

In a next step **(3),** the wire may be lifted (jump) over the already laid inner portion **IP** of the coupler coil **CC** component to start forming form the extension antenna **EA** component by laying the wire in a counter clockwise **CCW** direction, from an outermost winding to an innermost winding thereof. The extension antenna **EA** component may have 4 turns, and may be routed around a central position of the card body **CB,** substantially as illustrated, and maintained at a given distance "s" from the card antenna CA component, so as to be substantially symmetrical (from left-to-right, as viewed).

In a next step **(4),** having completed laying the extension antenna EA component, the embedding process continues around the already laid inner portion **IP** of the coupler coil **CC** component, forming an outer portion **OP** (or outer winding **"*ow*")** of the coupler coil **CC** component, with a counter clockwise **CCW** sense (laying direction), and having 5 turns, around the exterior of the inner portion **IP** of the coupler coil **CC** component, from an outermost winding to an innermost winding thereof. In this example, the inner portion **IP** and outer portion **OP** of the coupler coil **CC** component have the same sense **(CCW).** Alternatively, the inner portion **IP** and outer portion **OP** of the coupler coil **CC** component may be laid with opposite sense (one **CW,** the other **CCW).** The order of laying the inner portion **IP** and outer portion **OP** of the coupler coil **CC** component may also be switched (first lay the outer portion OP, then the extension antenna **EA,** then the inner portion **IP).** Or, lay both the inner portion **IP** and outer portion **OP** of the coupler coil **CC** component, without "interrupting" by laying the extension antenna **EA** component.

In a next step **(5),** after completion of the outer portion **OP** of the coupler coil **CC** component, the antenna wire may be routed to the perimeter of the card body **CB** to lay the inner winding **IW** of the card antenna **CA** component in a clockwise **CW** direction, having 3 or 4 turns, from an innermost winding to an outermost winding thereof. Embedding may stop, as a point **"f".** Compare **FIG. 2****,** the points "***a***" and "***f***" represent free (not connected) ends of the booster antenna **BA,** which otherwise is a continuous winding of the various components **(CA, CC, EA).** In this example, the inner winding **IW** and outer winding **OW** of the card antenna **CA** component have the same sense **(CW).** Alternatively, the inner winding **IW** and outer winding **OW** of the card antenna **CA** component may be laid with opposite sense (one **CW,** the other **CCW).** The inner winding **IW** and outer winding **OW** of the card antenna **CA** component may also be switched (first lay the outer portion OP, then the extension antenna EA, then the inner portion IP).

**FIGs. 13A - 13E** illustrate an example of laying the booster antenna (BA), step-by-step, or component (and portion thereof) - by - component. For example:
- **(****FIG. 13A****)** in a first step, the outer winding **OW** of the card antenna CA component may be laid, starting at a point "***a***", which is a free end of the booster antenna BA, and proceeding a number of turns around (but spaced inside of) the outer perimeter of at least a portion of the card body CB (card body omitted, for illustrative clarity), in a clockwise CW direction, from an inner turn to an outer turn thereof, to a point **"*g*"** which is an interim point (rather than an end point);
- **(****FIG. 13B****)** in a next step, crossing over the already laid turns of the outer winding OW of the card antenna CA component, then forming the inner winding ***iw*** of the coupler coil CC component by laying the wire in a counter-clockwise CCW direction from an outer turn to an inner turn thereof, to a point **"h"** which is an interim point (rather than an end point);
- **(****FIG. 13C****)** in a next step, crossing over the already laid turns of the inner winding ***iw*** of the coupler coil CC component, then forming at least a portion of the extension antenna EA component by laying the wire in a counter-clockwise CCW direction from an outer turn to an inner turn thereof, to a point "***i***" which is an interim point (rather than an end point); (In this step, the turns of the extension antenna EA component may cross over the wire coming from the coupler coil CC component and the wire coming from the outer winding OW of the card antenna CA component.)

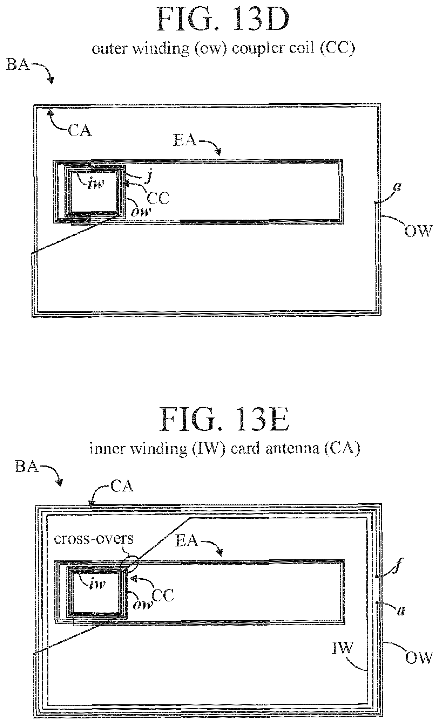

- **(****FIG. 13D****)** in a next step, crossing over the wire leading to the inner winding ***iw*** of the coupler coil CC component, then forming the outer winding ow of the coupler coil CC component around the inner winding ***iw*** of the coupler coil CC component by laying the wire in a counter-clockwise CCW direction from an outer turn to an inner turn thereof, to a point "***j***" which is an interim point (rather than an end point);
- **(****FIG. 13E****)** in a next step, crossing over the already laid extension antenna EA component, then forming the inner winding **IW** of the card antenna CA component by laying the wire in a clockwise CW direction from an inner turn to an outer turn thereof, to a point "***f***" which is a free end of the booster antenna BA.

A booster antenna (BA) may comprise a coil antenna (CA) component having an inner winding (IW) and an outer winding (OW), a coupler coil component (CC) having an inner winding (iw) and an outer winding (ow), and an extension antenna (EA) component, wherein:
the card antenna (CA) has two ends (a, f); and
each component (CA, CC, EA) of the booster antenna BA and winding thereof (IW, OW, iw, ow) has a number of turns and a laying sense (clockwise, counter clockwise).

A booster antenna (BA) may comprise:
a card antenna (CA) component disposed around a periphery of a card body (CB);
a coupler coil (CC) component disposed at an interior area of the card body;
wherein the coupler coil has two ends (c, d) an inner winding (iw) and an outer winding (ow); and
wherein the inner and outer windings cross over one another.

A booster antenna (BA) may incorporate one or more of the following features or characteristics, and may be formed by one or more of the following steps (which may be performed in the sequence set forth herein, or in another sequence):
starting from one end (a), the outer winding (OW) of the card antenna (CA) component may be laid in a clockwise (CW) direction, for approximately 3 or 4 turns around (just inside of) the perimeter of the card body (CB), from an innermost turn to an outermost turn thereof;
the inner winding (iw) of the coupler coil (CC) may be laid in a counter clockwise (CCW) direction, such as for approximately 8 - 10 turns, from an outermost turn to an innermost turn thereof;
the extension antenna (EA) component may be laid in a counter clockwise (CCW) direction, for approximately 4 turns, from an outermost winding to an innermost winding thereof;
the extension antenna (EA) may be routed around a central position of the card body CB; the extension antenna EA is maintained at a given distance "s" from the card antenna CA component, so as to be substantially symmetrical;
the outer winding (ow) of the coupler coil (CC) component may be laid in a counter clockwise (CCW) direction for approximately 5 turns around the inner winding (iw) of the coupler coil (CC) component, from an outermost winding to an innermost winding thereof;
the inner winding (IW) of the card antenna (CA) component may be laid in a clockwise CW direction, having approximately 3 or 4 turns, from an innermost winding to an outermost winding thereof
depending on the shape of the module antenna (MA) of the antenna module (AM), the coupler coil (CC) component may be formed by embedding 8 to 10 turns of wire from its outermost to its innermost turn;
any of the components (or portions thereof) may be laid with a reverse sense (such as clockwise rather than counter clockwise);
the components (or portions thereof) may be laid in a different order;
the components (or portions thereof) may be formed by a pattern of conductive tracks, rather than embedded wire;
the coupler coil (CC) component may have a rectangular, oval, round or elongated shape;
iron or ferromagnetic particles or flakes may be selectively deposited in areas between the antenna components;
the booster antenna (BA) may have a resonance frequency at or below 13.56 MHz;
holographic metal foils may be incorporated into the inlay (card body CB);
the holographic metal foils may not significantly attenuate the electromagnetic field;
the holographic metal foils may generate capacitance to improve communication performance of the smart card with an external reader;
the holographic metal foils may mask the presence of the booster antenna (BA);
one or more turns on the coupler coil (CC) component may be routed in an area directly beneath an antenna module (AM).

### Another example of the booster antenna BA

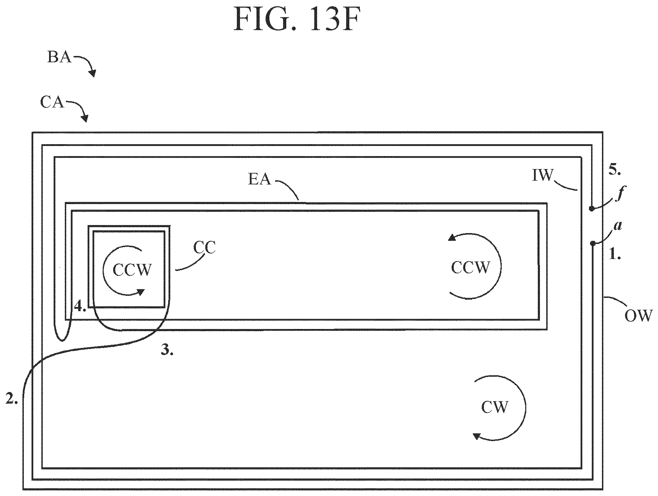

**FIG. 13F** illustrates another example of a booster antenna BA. Some comparisons may be made with the examples shown in **FIGs. 4A-4E****,** **6D****,** **12, 12A****,** and **13A-13E****,** and this example may incorporate various features and variations shown and described therein, or elsewhere, although each and every feature and variation may not be shown in this figure.

The booster antenna BA may comprise:
- a card antenna CA portion comprising an outer winding OW and an inner winding IW, each winding having a number of turns, but may comprise only a single winding. The outer and inner windings may have the same or a different sense (CW, CCW) than one another. The turns of the outer and inner windings may have the same or a different pitch as one another, and may be constant or varying.
- a coupler coil CC component comprising a single multi-turn winding having a cross-over, but which may alternatively be formed with an inner winding or portion (iw, IP) and an outer winding or portion (ow, or OP). The coupler coil CC component is shown formed as a "true coil" (compare **FIGs. 4B****,E,G),** having a cross-over, but may alternatively be formed as an "open loop" (compare **FIGs. 4A****,C,D).**
- an extension antenna EA component comprising a single multi-turn winding having a cross-over, but which may alternatively be formed with inner and outer windings (in a manner similar to that of the card antenna CA and coupler coil CC portions of the booster antenna BA).

As illustrated, the booster antenna BA may be formed by (some illustrative steps "1" to "5"):
1. starting at the free end "a" of the card antenna CA component, laying the wire for the outer winding OW, in a clockwise CW direction, from an innermost turn to an outermost turn thereof, around (just within) the periphery of the card body CB (not shown),
2. then, crossing over the already laid turns of the outer winding OW of the card antenna CA component, heading towards the interior of the card body CB and commencing laying the wire for the coupler coil CC component, in a counter-clockwise CCW direction, from an outermost turn to an innermost turn thereof,
3. then, crossing over the already laid turns of the coupler coil CC component, commencing laying the wire for the extension antenna EA component, in a counter-clockwise CCW direction, from an outermost turn to an innermost turn thereof,
4. then, crossing over the already-laid turns of the extension antenna EA component, heading back towards the periphery of the card body CB and commencing winding the inner winding IW of the card antenna CA component in a clockwise CW direction, from an innermost turn to an outermost turn thereof, within the already laid outer winding OW,
5. finishing laying of the wire for the booster antenna BA at the free end "f", which may be (but need not be) close to the other free end "a".

The coupler coil CC of any of the booster antenna BA components disclosed herein may have a rectangular, oval, round or elongated shape (depending on the shape of the module antenna of the antenna module) is formed by embedding 8 to 10 turns of wire from the outer to the inner position.

The extension antenna EA may have inner and outer windings. The coupler coil (CC) component may have inner and outer windings. The card antenna (CA) component may have inner and outer windings. Any of the components mentioned herein (CA, CC, EA) may have at least one winding in addition to its inner and outer windings.

The routing directions as indicated above can be in the reverse order. The various components (CA, CC, EA) of the booster antenna (BA), including portions thereof, may be laid from an innermost turn thereof to an outermost turn thereof, or from an outermost turn thereof to an innermost turn thereof.

The number of turns for a given component (CA, CC, EA) of the booster antenna (BA), including portions thereof, may change with the size of the booster antenna (BA). The extension antenna (EA) component may have approximately four turns.

The order of laying the windings of any of the booster antenna BA components disclosed herein may be performed in an order other than that which is described, for example, starting at the free end and finishing at the free end "***a***".

The order of laying the wire from an innermost to an outermost turn (or vice-versa) may be performed in the reverse order, such as from outermost to innermost turn (or vice-versa).

The electrical resistance and/or material of the wire (or other electrical conductor) forming the windings of any of the booster antenna BA components disclosed herein may be uniform, or may be varied along the length of the card antenna CA portion.

The booster antenna BA design of this example, in a dual interface card, may exhibit the property that the card can be interrogated by scrolling across a point-of-sale terminal without loss or impairment of the data.

The sense (counter clockwise) of the extension antenna EA being opposite to the sense (clockwise) of the card antenna CA may beneficially reduce the "Q" (quality) of the booster antenna BA, may increasing the bandwidth of the booster antenna BA, and may stabilize the resonance frequency of the booster antenna. It may be noted that the sense (CCW) of the coupler coil (CC) component may be the same as the sense (CCW) of the extension antenna (EA) component.

Most important is (1) because (2) and (3) are a result of this. Systems with high quality tend to be instable and the deviation of the resonance frequency of a transponder site is high. A stable resonance frequency is beneficial in the production since the results can be reproduced.

A reduced quality (1) causes a broader bandwidth (2) which is an enhancement of data communication because high speed transition signals need a broad bandwidth in order to avoid distortion of the signal.

### Some additional features

Iron or ferromagnetic particles or flakes could be selectively deposited in the areas between the antenna.

The booster antenna BA may be tuned, after lamination, to be below the resonance frequency of 13.56 MHz, rather than above.

Holographic metal foils may be glued or laminated to both sides of the booster antenna BA inlay (card body DB). The holographic metal foils may not significantly attenuate the electromagnetic field, in other words the holographic metal foils may be largely transparent to the RF field. The holographic metal foils can be used to mask (visually hide) the presence of the booster antenna BA. In addition, the holographic metal foils when placed either side (above, below) of the booster antenna BA can generate capacitance which may help improve the communication performance of the smart card with the reader **(****FIG. 1****).**

One or more turns on the coupler coil CC can be routed in the area directly beneath the antenna module AM. Placing some turns of the coupler coil CC directly under the antenna module AM, and consequently close to the module antenna MA, may increase the coupling between the booster antenna BA and the antenna module AM, resulting in improved power delivery to the chip IC (CM), thereby improving smart card performance.

The booster antenna (BA) is normally constructed from a track of wire embedded in an inlay substrate (or card body CB) comprising one or more layers of a material such as Polyvinyl Chloride (PVC), Polycarbonate (PC), Polyethylene (PE), Poly(ethylene terephthalate) (PET), Polyetherurethane, PET-G (Polyethylene Terephtalate Glycol-modified), Polyester Copolymer film, Teslin^{™}, paper, synthetic paper and the like. Alternatively, the booster antenna (BA) can be formed on the inlay substrate by chemically or laser etching a metal coating previously deposited on the substrate. A particular design of booster antenna (BA) with coupler coil (CC), having a certain geometry and number of coil windings, will exhibit specific electrical characteristics in terms of resonance frequency and impedance.

### Some Additional Examples

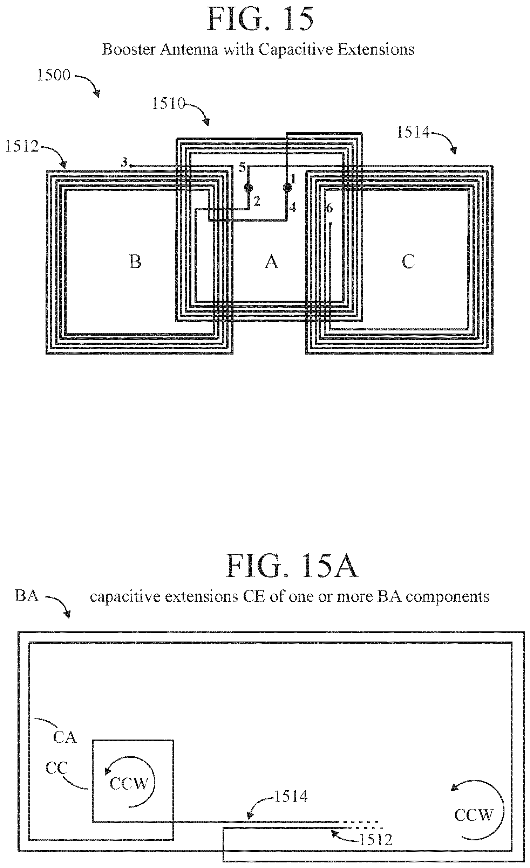

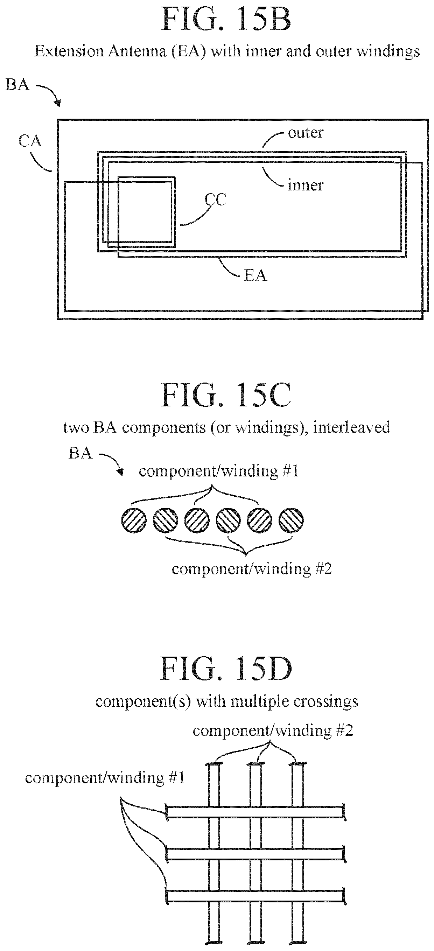

**FIG. 15** shows (schematically) an example of a booster antenna BA having an antenna component 1510, which may be any one (or more) of the card antenna CA, coupler coil CC or extension antenna EA components. Here, the antenna component 1510 is shown as having two ends "1" and "2", which are not free ends, but it is within the scope of the invention that the antenna component 1510 has only one free end, or no free ends.

A first stub (or extension CE) component 1512 may be connected (in any suitable manner, as represented by the black dot) by an end "4" to the end "1" of the antenna component 1510, and may have another end "3" which is left unconnected (as a free end). A second stub (or extension CE) component 1514 may be connected (in any suitable manner, as represented by the black dot) by an end "5" to the end "2" of the antenna component 1510, and may have another end "6" which is left unconnected (as a free end). The stub components 1512 and 1514 may constitute capacitive extensions of the antenna component 1510, such as has been described in US 13205600 filed 08 Aug 2011 (now US 8474726 issued 2013-07-12), with respect to a module antenna in an antenna module. This may include that there are two capacitive stubs and they are formed in a flat coil pattern having a number of turns, and are substantially identical with one another.

**FIG. 15A** shows a more realistic representation of a booster antenna BA having a card antenna CA component, a coupler coil CC component, and two capacitive extension components 1512 and 1514. One capacitive extension CE component 1512 extends from an end of the card antenna CA component. The other capacitive extension CE component 1514 extends from an end of the coupler coil CC component. This illustrates that the capacitive extension CE components may extend from different components (CA, CC, EA) of the booster antenna BA. (Any of the components illustrated may have two (or more) windings, but are shown with a single winding, for illustrative clarity. The extension antenna EA component has been omitted, for illustrative clarity, but may be one of the booster antenna BA components provided with one or more capacitive extensions, and itself may be arranged to serve as a capacitive extension CE.)

**FIG. 15B** shows an example of a booster antenna BA having a card antenna CA component, a coupler coil CC component, and an extension antenna EA component. In this example, the extension antenna EA component is shown having inner and outer windings. Compare **FIG. 4I** which shows two extension antennas EA-1 and EA2. This illustrates that a given component (CA, CC, EA) of a booster antenna BA may have two or more windings which may be, but need not necessarily be arranged as inner and outer (IW/OW, iw/ow, IP/OP) windings. And, although the booster antenna BA in this example is shown without and free ends, it should be understood that any of the components (CA, CC, EA, as well as CE) may have at least one free end.

It may also be noted that **FIG. 6A** shows one of the free ends ("f') being in the extension antenna EA component, the other free end "a" being in the coupler coil CC component (in this example, there is no showing of a card antenna CA component, and the booster antenna BA is shown disposed in the top half of the card body). And, that **FIG. 6B** shows both of the free ends "a" and "f' disposed in the extension antenna EA component (in this example, there is no showing of a card antenna CA component, and the booster antenna BA is shown disposed in the top half of the card body). **FIG. 5D** shows that two free ends of the booster antenna BA may be in the coupler coil CC component (in these examples, there is no showing of an extension antenna EA component). **FIG. 2** shows that two free ends of the booster antenna BA may be in the card antenna CA component.

This is illustrative of the proposition that selected features of various examples disclosed herein may be incorporated with other examples, to arrive at a desired configuration for the booster antenna BA. This would include, but is not limited to (i) having two or more windings per component, (ii) a component having one or more free ends, as well as (iii) the particular sense (CW, CCW) of a component or portions thereof, and (iv) any other features that are disclosed herein.

**FIG. 15C** shows a portion of a booster antenna BA wherein two components (any of CA, CC, EA, CE) or two windings of a single component, or portions thereof, may be laid so that their turns are interleaved with one another - herein labeled as "component/winding #1" and "component/ winding #2" .

**FIG. 15D** shows a portion of a booster antenna BA wherein at least one component (any of CA, CC, EA, CE), or portions thereof, may be laid so that several of its/their turns cross over each other, multiple times. Here, one of the components "component/winding #1" is shown with at least portions of some of its turns laid horizontally (from left-to-right, as viewed) on the card body (CB, not shown), and the other of the components "component/winding #2" is shown with at least portions of some of its turns laid vertically (from top-to-bottom, as viewed) on the card body (CB).

## Claims

1. Card body (CB, 120) for a smart card, comprising:
a surface having a surface area, an upper portion of the surface constituting approximately half of the surface area of the card body and a lower portion of the surface constituting a remaining approximately half of the surface area of the card body;
a first area extending around a peripheral portion of the card body in at least the upper portion of the card body;
a card antenna (CA, 132) disposed at least partially in the first area and having one free end;
a second area located in the upper portion of the card body and corresponding in size to an antenna module (AM) for the smart card;
a third area located in the upper portion of the card body which is separate from the first area and the second area; and
an extension antenna (EA) disposed in the third area;
**characterized by**:
a coupler coil (CC, 134) disposed in the second area,
wherein the extension antenna (EA) comprises a first and a second coil (EA-1, EA-2) connected in series with one another,
wherein a first end of the first coil (EA-1) is connected with an end of the coupler coil (CC, 134),
wherein a second end of the first coil (EA-1) is connected with a first end of the second coil (EA-2),
wherein a second end of the second coil (EA-1) is connected with an end of the card antenna (CA, 132), and
wherein another end of the coupler coil is a free end.

2. The card body of claim 1, wherein:
a portion of the extension antenna (EA) is disposed adjacent one side of the coupler coil (CC, 134).

3. A smart card comprising:
the card body (CB, 120) of claim 1; and
an antenna module (AM) having a radio frequency identification chip and a module antenna (MA).

## Patentansprüche

1. Kartenkörper (CB, 120) für eine Smartcard, umfassend:
eine Oberfläche mit einer Oberflächenfläche, wobei ein oberer Teil der Oberfläche ungefähr eine Hälfte der Oberflächenfläche des Kartenkörpers ausmacht und ein unterer Teil der Oberfläche eine verbleibende ungefähre Hälfte der Oberflächenfläche des Kartenkörpers ausmacht;
einen ersten Bereich, der sich um einen Umfangsteil des Kartenkörpers herum in wenigstens dem oberen Teil des Kartenkörpers erstreckt;
eine Kartenantenne (CA, 132), die wenigstens teilweise in dem ersten Bereich angeordnet ist und ein freies Ende hat;
einen zweiten Bereich, der in dem oberen Teil des Kartenkörpers verortet ist und der in einer Größe einem Antennenmodul (AM) für die Smartcard entspricht;
einen dritten Bereich, der in dem oberen Teil des Kartenkörpers verortet ist und der getrennt ist von dem ersten Bereich und dem zweiten Bereich; und
eine in dem dritten Bereich angeordnete Erweiterungsantenne (EA);
**gekennzeichnet durch**:
eine Kopplungsspule (CC, 134), die in dem zweiten Bereich angeordnet ist,
wobei die Erweiterungsantenne (EA) eine erste und eine zweite Spule (EA-1, EA-2) umfasst, die miteinander in Reihe verbunden sind,
wobei ein erstes Ende der ersten Spule (EA-1) mit einem Ende der Kopplungsspule (CC, 134) verbunden ist,
wobei ein zweites Ende der ersten Spule (EA-1) mit einem ersten Ende der zweiten Spule (EA-2) verbunden ist,
wobei ein zweites Ende der zweiten Spule (EA-1) mit einem Ende der Kartenantenne (CA, 132) verbunden ist, und
wobei ein weiteres Ende der Kopplungsspule ein freies Ende ist.

2. Kartenkörper nach Anspruch 1, wobei ein Teil der Erweiterungsantenne (EA) benachbart zu einer Seite der Kopplungsspule (CC, 134) angeordnet ist.

3. Smartcard umfassend:
den Kartenkörper (CB, 120) nach Anspruch 1; und
ein Antennenmodul (AM) mit einem Radiofrequenz-Identifikationschip und einer Modulantenne (MA).

## Revendications

1. Corps de carte (CB, 120) pour une carte à puce, comprenant :
une surface ayant une superficie, une partie supérieure de la surface constituant approximativement la moitié de la superficie du corps de carte et une partie inférieure de la surface constituant approximativement la moitié résiduelle de la superficie du corps de carte ;
une première zone s'étendant autour d'une partie périphérique du corps de carte dans au moins la partie supérieure du corps de carte ;
une antenne de carte (CA, 132) disposée au moins partiellement dans la première zone et ayant une extrémité libre ;
une deuxième zone située dans la partie supérieure du corps de carte et correspondant, du point de vue de la taille, à un module d'antenne (AM) pour la carte à puce ;
une troisième zone située dans la partie supérieure du corps de carte qui est séparée de la première zone et de la deuxième zone ; et
une antenne d'extension (EA) disposée dans la troisième zone ;
**caractérisé par** :
une bobine de coupleur (CC, 134) disposée dans la deuxième zone,
dans lequel l'antenne d'extension (EA) comprend une première et une seconde bobine (EA-1, EA-2) raccordées en série entre elles,
dans lequel une première extrémité de la première bobine (EA-1) est raccordée avec une extrémité de la bobine de coupleur (CC, 134),
dans lequel une seconde extrémité de la première bobine (EA-1) est raccordée avec une première extrémité de la seconde bobine (EA-2),
dans lequel une seconde extrémité de la seconde bobine (EA-1) est raccordée avec une extrémité de l'antenne de carte (CA, 132), et
dans lequel une autre extrémité de la bobine de coupleur est une extrémité libre.

2. Corps de carte selon la revendication 1, dans lequel :
une partie de l'antenne d'extension (EA) est disposée, de manière adjacente à un côté de la bobine de coupleur (CC, 134) .

3. Carte à puce comprenant :
le corps de carte (CB, 120) selon la revendication 1 ; et
un module d'antenne (AM) ayant une puce d'identification par radiofréquence et une antenne de module (MA).
